(19) Europäisches Patentamt
European Patent Office
Office européen des brevets

(11) **EP 3 324 203 B1**

(12) **EUROPÄISCHE PATENTSCHRIFT**

(45) Veröffentlichungstag und Bekanntmachung des Hinweises auf die Patenterteilung:
**03.01.2024 Patentblatt 2024/01**

(21) Anmeldenummer: **16200115.0**

(22) Anmeldetag: **22.11.2016**

(51) Internationale Patentklassifikation (IPC):
**G01S 7/499** (2006.01)  **G01S 7/487** (2006.01)
**G01S 17/08** (2006.01)  **G01S 17/42** (2006.01)

(52) Gemeinsame Patentklassifikation (CPC):
**G01S 17/08; G01S 7/487; G01S 7/499; G01S 17/42**

(54) **LASERDISTANZMESSMODUL MIT POLARISATIONSANALYSE**

LASER DISTANCE MEASURING MODULE WITH POLARIZATION ANALYSIS

MODULE DE TÉLÉMÉTRIE LASER PRÉSENTANT UNE ANALYSE DE POLARISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.05.2018 Patentblatt 2018/21**

(73) Patentinhaber: **Hexagon Technology Center GmbH**
**9435 Heerbrugg (CH)**

(72) Erfinder:
• **HINDERLING, Jürg**
**CH-9437 Marbach (CH)**
• **PIOK, Thomas**
**A-6842 Koblach (AT)**

(74) Vertreter: **Kaminski Harmann**
**Patentanwälte AG**
**Landstrasse 124**
**9490 Vaduz (LI)**

(56) Entgegenhaltungen:
**EP-A1- 1 079 239**    **DE-A1- 3 930 272**
**DE-A1-102013 207 148**    **DE-A1-102015 200 027**
**US-A- 4 333 008**

• **Songxin Tan ET AL: "Multiwavelength Polarimetric Lidar for Foliage Obscured Man-Made Target Detection", Advances in Geoscience and Remote Sensing, chapter 18, 1. Januar 2009 (2009-01-01), Seiten 391-406, XP055375436, DOI: 10.5772/8289 ISBN: 978-953-30-7005-6 Gefunden im Internet: URL:https://cdn.intechopen.com/pdfs-wm/9524.pdf [gefunden am 2017-05-23]**
• **DEL GUASTA M ET AL: "USE OF POLARIMETRIC LIDAR FOR THE STUDY OF ORIENTED ICE PLATES IN CLOUDS", APPLIED OPTICS, OPTICAL SOCIETY OF AMERICA, WASHINGTON, DC; US, Bd. 45, Nr. 20, 10. Juli 2006 (2006-07-10) , Seiten 4878-4887, XP001249556, ISSN: 0003-6935, DOI: 10.1364/AO.45.004878**

EP 3 324 203 B1

**Beschreibung**

Die vorliegende Erfindung betrifft eine Distanzmessmethode und ein elektronisches Laserdistanzmessmodul zur Verwendung in einem handhaltbaren Distanzmessgerät, Laserscanner, Profiler, Lasertracker, oder Tachymeter, zur Bestimmung einer Distanz zu einem Zielobjekt, wobei durch eine Sendeeinheit des Laserdistanzmessmoduls ausgewählte Polarisationszustände emittiert werden. Dabei wird das Sendesignal derart ausgesendet und das Empfangssignal derart erfasst, dass eine Polarisationskennung des Polarisationszustands des Sendesignals abgeleitet werden kann, um beim Verarbeiten des Empfangssignals zur Bestimmung der Distanz Mehrfachreflexionen zu berücksichtigen.

Im Bereich der elektronischen bzw. elektrooptischen Distanzmessung sind verschiedene Prinzipien und Verfahren bekannt. Ein Ansatz besteht darin, gepulste elektromagnetische Strahlung, wie z.B. Laserlicht, auf ein zu vermessendes Ziel auszusenden und nachfolgend ein Echo von diesem Ziel als rückstreuendem Objekt zu empfangen, wobei die Distanz zum zu vermessenden Ziel beispielsweise anhand der Laufzeit, der Form, und/oder der Phase des Pulses bestimmt werden kann. Solche Laserdistanzmesser haben sich mittlerweile in vielen Bereichen als Standardlösungen durchgesetzt.

Zur Detektion des zurückgestreuten Pulses werden zumeist zwei unterschiedliche Ansätze oder eine Kombination daraus verwendet.

Bei der so genannten Schwellwertmethode wird ein Lichtpuls detektiert, wenn die Intensität der auf einen Detektor des eingesetzten Distanzmessgeräts einfallenden Strahlung einen gewissen Schwellwert überschreitet. Durch diesen Schwellwert wird verhindert, dass Rauschen und Störsignale aus dem Hintergrund fälschlich als Nutzsignal, d.h. als rückgestreutes Licht des emittierten Pulses, detektiert werden.

Der andere Ansatz basiert auf der Abtastung bzw. dem Sampling des rückgestreuten Pulses. Dieser Ansatz wird typischerweise bei schwachen rückgestreuten Signalen (z.B. Pulssignale) verwendet, wie sie beispielsweise durch grössere Messdistanzen bedingt werden, oder allgemein für eine Erhöhung der Messgenauigkeit. Ein emittiertes Signal wird detektiert, indem die von einem Detektor erfasste Strahlung abgetastet, innerhalb des abgetasteten Bereichs ein Signal identifiziert und schliesslich eine Lage des Signals zeitlich bestimmt wird. Durch die Verwendung einer Vielzahl von Abtastwerten und/oder zur Emissionsrate synchronem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können.

Heutzutage wird dabei mittels der Wellenformdigitalisierungsmethode ("Waveform Digitizing", WFD) häufig die gesamte Wellenform des analogen Signals der von einem Detektor erfassten Strahlung abgetastet. Nach Identifikation der Codierung des zugehörigen Sendesignals (ASK, FSK, PSK, etc.) eines empfangenen Signals, wird aus einem definierten Verlaufspunkt des abgetasteten, digitalisierten und rekonstruierten Signals, beispielsweise den Wendepunkten, den Kurvenmaxima, oder integral mittels eines aus der Zeitinterpolation bekannten Optimum Filters, sehr genau eine Signallaufzeit ("Pulslaufzeit") bestimmt.

Alternativ oder zusätzlich zur Bestimmung der Pulslaufzeit erfolgt eine (schnelle) Abtastung oft auch hinsichtlich in Amplitude, Phase, Polarisation, Wellenlänge und/oder Frequenz codierten oder modulierten Impulsen oder Impulsfolgen.

Beim Ansatz der zeitlich sehr präzisen Abtastung bzw. dem Sampling des zurückgestreuten Signals wird das vom Detektor erzeugte elektrische Signal mittels eines Analog-Digital-Wandlers ("Analog-Digital-Converter", ADC) in eine digitale Signalfolge umgewandelt. Dieses digitale Signal wird anschliessend meistens in Echtzeit weiter verarbeitet. In einem ersten Schritt wird das Signal, oft als Impuls moduliert, durch spezielle digitale Filter erkannt und schliesslich dessen Lage innerhalb der Signalfolge bestimmt. Durch die Verwendung einer Vielzahl von abgetasteten Impulsfolgen kann ein Nutzsignal auch unter ungünstigen Umständen identifiziert werden, so dass auch grössere Distanzen oder verrauschte bzw. mit Störungen behaftete Hintergrundszenarien bewältigt werden können.

Eine der einfachsten Modulationsarten ist die Kennzeichnung der einzelnen Impulse oder der Pulsfolgen per Abstandscodierung, wie z.B. beschrieben in der EP 1 832 897 B1. Diese wird beispielsweise zu dem Zwecke der Re-Identifizierbarkeit eingesetzt. Diese Wiedererkennung ist dann erforderlich, wenn eine Mehrdeutigkeit entsteht, welche bei der Laufzeitmessung von Impulsen durch unterschiedliche Situationen hervorgerufen werden kann, beispielsweise wenn sich zwischen Vermessungsgerät und Zielobjekt mehr als ein Impuls oder eine Impulsgruppe befindet.

Zielobjekte für eine Distanzmessung können dabei einerseits natürliche Oberflächen von Gegenständen wie Hauswänden, Strassen, Fenster, mit einem Farbanstrich versehene Objekte, matte oder glänzende Metallflächen und dergleichen sein. Andererseits können als Zielobjekte aber auch Zieltafeln wie retroreflektierende Folien oder Cornercubes verwendet werden.

Beim Anmessen von Oberflächen mit einem Laserstrahl wird das Licht je nach den optischen Eigenschaften und der mechanischen Beschaffenheit unterschiedlich gestreut und zurückgeworfen. Bei rauen oder matten Oberflächen wird das Licht nach dem Lambertschen Gesetz gleichmässig in alle Richtungen gestreut. Bei Oberflächen mit Glanz wird ein erheblicher Teil in die spiegelnde Richtung reflektiert, und bei Flächen mit Textur können komplexe Rückstreumuster mit hoher Intensität entstehen.

Da die Rückstreuung hauptsächlich - auch bei Oberflächen mit Lambertschen Streuverhalten - nicht in die Richtung des Distanzmessgeräts erfolgt, ist die Wahrscheinlichkeit sehr hoch, dass das gestreute oder gespiegelte Licht eine weitere Oberfläche trifft und erneut eine Rückstreuung erfährt. Mehrfachreflexionen beeinträchtigen die Distanzmessung. In der Regel ist deshalb ein Distanzmessgerät derart ausgebildet, dass eine Empfangsvorrichtung des Distanzmessgeräts nur über ein sehr kleines Sichtfeld verfügt, wodurch mehrfach reflektierte Rückstrahlung nicht mehr im Gesichtsfeld des Distanzmessgeräts liegt.

Es gibt aber Anordnungen und Formen von Objekten die zu vermessen sind, bei welchen das Problem von Mehrfachreflexionen auch bei sehr kleinem Gesichtsfeld der Empfangseinheit weiterhin störend ist. Unter anderem sind dies insbesondere Kanten oder Ecken, wo sich zwei Flächen treffen. Nahe bei den Ecken und in der Ecke selbst ist ein Teil der reflektierten Strahlung zweifach gestreut und wird von der Empfangseinheit des Distanzmessers erfasst. Hat weiter zum Beispiel wenigstens eine der beiden Wände einen Lackanstrich, dann wird die Mehrfachreflexion dominant. Insbesondere auch nasse Flächen, z.B. nasse Strassen, können zu störenden Mehrfachreflexionen führen, welche den Weg zurück in die Empfangseinheit des Messgeräts finden.

Metallische und aus Kunststoff gefertigte Gegenstände neigen grundsätzlich zu spiegelnder Reflexion. Wird beispielsweise ein Rohr aus einem solchen Material gescannt, so sind die Koordinaten der Messpunkte oft nicht korrekt.

Beim Laserscanning wird beispielsweise oft die stillschweigende Annahme gemacht, dass der Laserstrahl sobald er auf die Oberfläche des zu vermessenden Objekts trifft, und der von dem Messgerät eingesehene Bereich nur einmalig gestreute Strahlung empfängt. Andere Strahlanteile, die nicht direkt vom Auftreffpunkt am Objekt stammen, werden bisher vernachlässigt.

Das Ergebnis von Mehrfachreflexionen sind Artefakte in den ermittelten Punktwolken, insbesondere beim Anmessen von Gegenständen mit Teilglanz wie Metallteilen oder Fensterscheiben. Die Artefakte beinhalten in Fensterscheiben gespiegelte Wände, eine verzerrte Form von Ebenen in Ecken, über glänzende Rohre oder Handläufe eingespiegelte fremde Gegenstände in der Winkelrichtung des Laserstrahls, etc.

Eine Sonderstellung nehmen retroreflektierende Gegenstände ein. Diese erzeugen zwar eine dreifach-Reflexion, werfen aber das Licht winkelgenau zurück zum Messgerät. Dadurch wird keine unerwünschte zweite Oberfläche bestrahlt und die Distanzmessung ist unter Berücksichtigung des Zick-Zack-Wegs im retroreflektierenden Material korrekt. Dieser Distanzoffset wird Additionskonstante des retroreflektierenden Zielobjekts genannt.

Massnahmen für eine Kompensation von durch Mehrfachreflexionen verursachten Artefakten im Rahmen einer Distanzmessung sind heute wenig bekannt. Moderne Distanzmesser die auf dem Prinzip der Wellenformdigitalisierung (WFD) basieren, können beispielsweise die Verzerrung der Signal- oder Impulsform, welche durch sich überlappende Mehrfachreflexe oder Mehrfachziele entstehen, detektieren. Bei solchen Vorkommnissen wird in der Regel das Resultat der Distanzmessung verworfen.

Bei Mehrfachreflexen, bei denen der Abstand zwischen jeweils zugeordneten Distanzwerten grösser ist als die Breite der Wellenform eines einzelnen Reflexionssignals, werden die beiden den Zielen zugeordneten Distanzwerte ausgegeben. Es ist aber nicht gesichert, ob die ermittelten Distanzen richtig sind, es könnte sich dabei auch um einen zusätzlichen - beispielsweise an einer nassen Strasse gespiegelten - Lichtweg handeln, der nicht als Mehrfachreflex erkannt wird. Auch bei Spiegelungen an Fensterscheiben können Mehrfachreflexe die keinen echten radialen Abstand zum Messgerät darstellen, unerkannt bleiben.

Bekannt sind auch Vorrichtungen die bestimmte Mehrfachreflexe ausblenden, beispielsweise wobei Mehrfachreflexe ausgeblendet werden, die unter einem Winkel zur optischen Empfangseinheit zurück reflektiert werden, der steiler ist als der Empfangswinkel der Messvorrichtung (FOV). Es werden also nur Signale empfangen die einen Strahlwinkel innerhalb des Gesichtsfeldes (FOV) haben. Die Problematik der Mehrfachreflexe bleibt aber innerhalb des Empfangsgesichtsfelds bestehen. Heutige Distanzmesser haben ein Gesichtsfeld von typischerweise ein bis zwei millirad.

Scanner mit einem schnell drehenden Laserstrahl haben oft ein noch grösseres Gesichtsfeld, da das Gesichtsfeld der Empfangseinheit zusammen mit dem Sendestrahl rotiert wird. Dies hat den Nachteil, dass während der Laufzeit des Laserpulses zum Zielobjekt und zurück das Gesichtsfeld der Empfangseinheit fortwährend weiter rotiert und somit nicht mehr in die Richtung des zu empfangenden Pulses schaut. Das Gesichtsfeld der Empfangseinheit muss entweder mit ausreichend grossen Winkelbereich dimensioniert sein oder es braucht eine sogenannte Derotation, wie sie in Lehrbüchern zu finden ist. Insbesondere moderne Scanner mit einer raschen Scanneinheit (>50Hz) und/oder welche auf Distanzen über 100m messen, brauchen aber dennoch einen grossen Empfangsraumwinkel.

Die DE 10 2015 200 027 A1 betrifft die Problematik von Mehrfachreflexionen einer beispielsweise für eine Dauerstrichradarauswertung ausgelegten Radar- oder Lidarvorrichtung für Fahrerassistenzsysteme. Empfängerseitig wird für ein einzelnes Sendesignal eine Polarisationsanalyse durchgeführt, um beispielsweise zwischen einer Einfach- und einer Mehrfachreflexion zu unterscheiden. Die Bereitstellung der Polarisationsanalyse wird durch eine spezielle polarisationssensitive Empfangsoptik bereitgestellt.

Es ist deshalb eine Aufgabe der Erfindung, eine verbesserte Distanzmessung bereitzustellen, welche Artefakte von Mehrfachreflexen zumindest erkennt und so fehlerhafte Distanzmessungen automatisch ausblendet.

Eine spezielle Aufgabe der Erfindung ist zudem einen Messprozess bereitzustellen bei dem Distanzfehler durch Mehrfachreflexionen kompensiert werden und somit eine verbesserte Distanzmessgenauigkeit ermöglicht wird.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Die Erfindung betrifft eine Distanzmessmethode für ein Laser-Distanzmessgerät ausgebildet als handhaltbares Distanzmessgerät, Laserscanner, Profiler, Lasertracker, oder Tachymeter, zur Bestimmung einer Distanz zu einem Zielobjekt mit einem Aussenden eines Sendesignals, insbesondere einer gepulsten Signalreihe; einem Empfangen von zumindest Teilen des am Zielobjekt reflektierten Sendesignals als Empfangssignal; und einem Verarbeiten des Empfangssignals um daraus die Distanz zum Zielobjekt abzuleiten, insbesondere wobei die Bestimmung der Distanz auf dem Pulslaufzeitverfahren basiert.

Gemäss der vorliegenden Erfindung wird das Sendesignal in einem definierten Polarisationszustand ausgesendet, insbesondere wobei mindestens eine Polarisationskennung des Polarisationszustands des Sendesignals bekannt ist, im Speziellen der Wert mindestens eines Stokes-Parameters und/oder eine Polarisationsrichtung. Das Sendesignal wird ferner derart ausgesendet und das Empfangssignal wird derart erfasst, dass eine Polarisationskennung des Polarisationszustands des Sendesignals dem Empfangssignal anhaftet, wobei die Polarisationskennung so gewählt ist, dass sie Indiz dafür ist, ob das Empfangssignal aus einer Einfachreflexion oder einer Mehrfachreflexion des Sendesignals hervorgeht, wobei basierend auf der Polarisationskennung eine Wertung des Empfangssignals abgeleitet wird, welche beim Verarbeiten des Empfangssignals zur Bestimmung der Distanz zum Zielobjekt berücksichtigt wird.

Eine Polarisationskennung kann beispielsweise eine Intensität der Strahlung - abhängig von der Wellenlänge - gemessen mit mindestens einem polarisierten Filter beschreiben, beispielsweise ein Strahlungsanteil mit einer definierten Polarisationsrichtung, z.B. bezüglich einer Messung mit einem linear polarisierten Filter, oder ein Strahlungsanteil gemessen mit einem zirkularen Polarisationsfilter. Eine Polarisationskennung kann auch den Grad der (totalen) Polarisation, einen Grad des linearen und/oder zirkularen Polarisationsanteils, einen Polarisationswinkel, Werte eines oder mehrerer Stokesparameter, oder den kompletten Stokesvektor beschreiben.

In einer speziellen Ausführungsform wird das Sendesignal als im Wesentlichen komplett linear oder zirkular polarisierte Strahlung ausgesendet.

Ein allgemeiner, reiner Polarisationszustand kann aber auch eine kohärente Ueberlagerung von diesen einfachen Polarisationszuständen sein. Diese reinen Polarisationszustände werden oft mittels des Jones-Vektor Formulismus beschrieben. Eine teilpolarisierte Strahlung hingegen stellt ein Gemisch im Sinne eines statistischen Ensembles von unabhängig polarisierten Strahlungsanteilen dar. Die Charakterisierung dieser inkohärenten Polarisationszustände kann mit dem sogennanten Stokesvektor beschrieben werden. Der Polarisationsgrad der emittierten und insbesondere der empfangenen Strahlung liegt oft leicht unter 100 %, da ein reiner Polarisationszustand nur schwer einstellbar ist. Leichte Abweichungen von einer 100 % Polarisation ist aber für viele Anwendungen meist vernachlässigbar, beispielsweise aufgrund einer gegebenen Messgenauigkeit eines verwendeten Polarimeteraufbaus.

Eine Kernidee der Erfindung basiert also darauf, dass Mehrfachreflexe über einen Polarisationszustand und/oder eine Polarisationsmodifikation detektiert werden, wodurch Fehlmessungen erkannt und behoben werden.

Es gibt verschiedene Möglichkeiten um aus unpolarisierter Strahlung teilweise oder komplett polarisierte Strahlung herzustellen. Bei jeder Reflexion an einer dielektrischen Grenzschicht (also z.B. an einer Glasscheibe) ergibt sich eine teilweise Polarisierung. Der Grund hierfür liegt in den Fresnelgleichungen. Der Reflexionsfaktor hängt stark vom Einfallswinkel, den Brechzahlen der Medien und der Polarisation ab, so dass im reflektierten Strahl eine der beiden Polarisationsrichtungen stärker vertreten ist.

Insbesondere für raue Oberflächen kann die Beeinflussung der Polarisation komplex sein.

Solange unpolarisierte Strahlung an einer Oberfläche gestreut wird, enthält ein gestreuter Strahl neben einem unpolarisierten Anteil auch einen Anteil an polarisierter Strahlung, da die Reflektivität im Allgemeinen auch für mikrostrukturierte Grenzflächen polarisationsabhängig ist.

Wird eine Oberfläche mit polarisierter Strahlung bestrahlt, dann wird der polarisierte Strahl typischerweise partiell depolarisiert, d.h. der Grad der Polarisierung nimmt ab.

Typischerweise gilt die Faustregel, dass mit zunehmender Oberflächenrauheit und Irregularität die Depolarisation zunimmt. Als anschaulichen Grund kann man beispielsweise die mikroskopischen Mehrfachstreuprozesse bei stark rauen Oberflächen annehmen.

Im Rahmen der Erfindung sind diverse Depolarisationsprozesse bekannt, beispielsweise überstreicht ein Laserstrahl - z.B. eines Laserscanners - die raue Oberfläche eines Zielobjekts, wodurch fortwährend neue Bereiche angestrahlt und dadurch die Rückstreuung in der Polarisation und Amplitude zeitlich während einer Messung verändert und integral depolarisiert wird.

Die endliche spektrale Breite des Lasers führt zusammen mit den optischen Gangunterschieden der rauen Oberfläche zu einer weiteren Depolarisation der detektierten Strahlung und weiter reduziert die räumliche Mittelung über mehrere Beugungsordnungen der reflektierten Strahlung am Detektor selber den Polarisationsgrad.

Metalle haben einen komplexen Brechungsindex und die Fresnel-Reflexionskurven unterscheiden sich von den Dielektrika. Anstelle des Brewsterwinkels steht beispielsweise der Hauptwinkel, an welchem die Reflektivität der p-Polarisation (transversal magnetisch, "parallel" polarisierte Strahlung) minimal und grösser Null ist. Bei Reflexion von Licht erfährt das elektromagnetische Feld zusätzlich eine Phasendrehung, sodass der E-Feldvektor eine Ellipse beschreibt.

Glatte Oberflächen zeigen erfahrungsgemäss einen stärkeren direkt reflektierten Anteil, wohingegen raue Oberflächen in den gesamten Halbraum rückreflektieren. Zudem wird bei glatten Oberflächen der erhebliche Unterschied zwischen s-Reflektivität (transversal elektrisch, "senkrecht" polarisierte Strahlung) und p-Reflektivität (transversal magnetisch, "parallel" polarisierte Strahlung) deutlich, beispielsweise anhand der Fresnelgleichungen.

Das Streuverhalten über den Winkel ist jedoch auch bei hohen Rauigkeiten für die s und p Polarisation unterschiedlich. Die s-Polarisation streut typischerweise etwas stärker und zeigt einen restlichen Spekular-Peak in der Nähe des zu erwartenden Glanzwinkels. Die Depolarisation im diffusen Streulichtanteil ist damit nicht komplett.

Neben dem Mechanismus der Depolarisation ist weiter der Mechanismus der partiellen Polarisation zu berücksichtigen. Von partieller Polarisation wird gesprochen, wenn unpolarisiertes Licht einfällt und vorwiegend spekular reflektiert wird. Wird jedoch mit einer polarisierten Laserquelle gemessen, unterscheiden sich die spekularen Reflexionen hauptsächlich hinsichtlich der Intensität.

Weiter sind bei einer Interaktion von Strahlung mit einer Materialoberfläche neben den Effekten Polarisation und Depolarisation auch die Effekte Diattenuation und Retardance (Verzögerung) zu berücksichtigen. Unter Diattenuation versteht man die unterschiedliche Transmission oder Reflexion für die jeweilige Polarisationsrichtung, wie beispielsweise bei einem Polarisator. Die Retardance beschreibt den Unterschied zwischen den zugeordneten Phasenverschiebungen der beiden charakteristischen Polarisationen bei der Transmission oder Reflexion von Strahlung.

Der Polarisationszustand von partiell kohärentem Licht kann beispielsweise mit den vier Stokes-Grössen (S1,S2,S3,S4) beschrieben werden. Dabei beschreibt S1 die gesamte Strahlintensität als Summe beider Polarisationen, S2 im Wesentlichen den linear-senkrecht polarisierten Anteil, S3 den 45Grad verdrehten linear polarisierten Anteil und S4 im Wesentlichen den zirkular polarisierten Anteil.

Der Polarisationszustand wird mit den S1-normierten Grössen S2, S3 und S4 beschrieben, wobei typischerweise unterschieden wird zwischen totalem Polarisationsgrad (DOP, "degree of dolarization", 100 % für komplett polarisierte Strahlung, 0 % für unpolarisierte Strahlung), linearem Polarisationsgrad (DOLP, "degree of linear polarization") und zirkularem Polarisationsgrad (DOCP, "degree of cirular polarization"):

$$DOP = \frac{\sqrt{S_2{}^2 + S_3{}^2 + S_4{}^2}}{S_1}$$

$$DOLP = \frac{\sqrt{S_2{}^2 + S_3{}^2}}{S_1}$$

$$DOCP = \frac{S_4}{S_1}$$

Eine weitere Kennzahl ist der Polarisationswinkel (AOP, "angle of polarisation"), wodurch der Drehwinkel der Polarisationsrichtung oder der Polarisationsellipse beschrieben wird:

$$AOP = \frac{1}{2} \cdot atan\left(\frac{S3}{S2}\right)$$

Die Intensität der reflektierten Strahlung kann aufgeteilt werden in eine inkohärente Ueberlagerung von einem komplett polarisierten und einem unpolarisierten Anteil, beispielsweise durch folgende Zerlegung:

$$S = \begin{bmatrix} S_1 \\ S_2 \\ S_3 \\ S_4 \end{bmatrix} = \begin{bmatrix} DOP*S_1 \\ S_2 \\ S_3 \\ S_4 \end{bmatrix} + \begin{bmatrix} (1-DOP)S_1 \\ 0 \\ 0 \\ 0 \end{bmatrix}$$

Bei einer Streuung an Oberflächen die weder doppelbrechend noch metallisch sind, ist es für eine Erkennung von Mehrfachreflexen oft ausreichend den Grad der linearen Polarisation DOLP und allenfalls den Polarisationswinkel AOP zu betrachten. Bei Mehrfachstreuungen an rauen Oberflächen oder Reflexion an mehreren Oberflächen und auch an Metallen treten Phasenverschiebungen zwischen den x und y-Komponenten des E-Felds auf, was den Grad der zirkularen Polarisation DOCP verändert.

Das Laserlicht ist durchwegs polarisiert, daher ist für Laserlicht die partielle Polarisierung bei der Wechselwirkung mit der Objektoberfläche nicht relevant. Zudem vereinfacht sich damit die Analyse der Polarisationszustände der vom Zielobjekt gestreuten Strahlung.

Die Stokes-Grössen beschreiben die gesamte Empfangsleistung (S1), die Depolarisation (1-DOP), und die Form (ellipticity) und Lage (azimuth) der Polarisations-Ellipse und damit auch die gegenseitige Phasenverschiebung der beiden transversalen E-Feldvektorkomponenten des polarisierten Lichtanteils.

Die vier Stokes Grössen (S1,S2,S3,S4) - auch Stokesparameter genannt - werden typischerweise in einem Vektor ("Stokesvektor") zusammengefasst und die Interaktionen mit Oberflächen, transparenten Körpern und Metallen können mit Müller-Matrizen beschrieben werden. Der Müller Calculus beschreibt die vier Interaktionen Diattenuation, Retardance, Polarisation und Depolarisation, welche bei Einfach- und Mehrfachstreuungen auftreten können. Der Streuprozess wird dadurch auf eine einzige Mueller-Matrix reduziert. Durch eine Anzahl von bereitgestellten Input- und gemessenen Output-Stokesvektoren lassen sich die Muellermatrixelemente bestimmen, wodurch Rückschlüsse auf die Streunatur des Strahlungsweges abgeleitet werden können.

Stokesvektoren der rückgestreuten Strahlung lassen sich beispielsweise mit Polarisationsfilteranordnungen bestimmen und es existieren verschiedene Verfahren zur Bestimmung der Stokes-Parameter.

Zum Beispiel kann eine Messung der rückgestreuten Strahlung in mindestens vier Schritten erfolgen, d.h. eine Messung ohne Filter, mit einem ersten Linearpolarisator (linearpolarisierter Filter), mit einem zum ersten Linearpolarisator um 45 Grad rotierten Linearpolarisator und mit einem zirkularen Polarisationsfilter (Zirkularpolarisator, z.B. ein rechts zirkularer Polarisationsfilter). Zirkularpolarisatoren sind lineare Polarisatoren mit einer zusätzlichen $\lambda$/4-Verzögerungsschicht. Daraus lassen sich die vier Stokesparameter ableiten:

$$S1 = I_{1=} \; I_p + I_s, \quad S2 = I_p - I_s, \quad S3 = I_{+45} - I_{-45}, \quad S4 = S_R - S_L.$$

Die vier Intensitätsmessungen können nacheinander oder parallel durchgeführt werden, beispielsweise mittels vier Detektoren.

Eine andere Methode besteht darin, eine drehende Phasenverzögerungsplatte zu verwenden, beispielsweise eine $\lambda$/4-Verzögerungsplatte, mit einem Polarisator - typischerweise Analysator genannt - vor dem Detektor. Während des Drehens der Platte wird die Empfangsleistung nach dem Analysator gemessen und mittels einer aus den Müllermatrizen abgeleiteten Transformation der Stokesvektor bestimmt, insbesondere aus Frequenz, Phase und Amplitude des mit der Phasenplatte erzeugten Signals.

Auch bekannt sind sogenannte Stokes-Kameras, wobei die benötigten Polarisationsfilter in einer Matrixstruktur über den Pixeln angeordnet sind, wodurch die Kameras neben dem Intensitätsbild auch den Polarisationszustand der empfangenen Strahlung registrieren. Eine Stokes-Kamera löst jedoch das Problem der Mehrfachreflexion oft nicht ausreichend, da der Messstrahl der Distanzmesseinheit wegen Parallaxe und unterschiedlicher Ausrichtung einen leicht anderen Strahlengang zu den Kamera-Pixeln aufweist.

Bei spektral schmalbandiger Strahlung oder unter Zuhilfenahme von spektralen Filtern, z.B. Beugungsgitter, eignen sich zur effizienten Strahlanalyse auch Polarimeter basierend auf dem Prinzip des Savart-Plate-Interferometers, des Wollaston Polarimeters oder auch des Sagnac-Interferometers, d.h. allgemein Messungen wobei die Polarisationszustände mittels eines doppelbrechenden Materials, insbesondere eines Polarisationsmodulators, beispielsweise basierend auf einem akusto-optischen oder elektro-optischen Verzögerungselements, und/oder eines polarisierenden Strahlteilers aufgeteilt werden und von weiteren Elementen wie Phasenplatten und Analysatoren aufbereitet und Photodetektoren oder Kameras zugeleitet werden.

Erfindungsgemäss wird das Empfangssignal mittels Wellenform-Digitalisierung ausgewertet, insbesondere zur Identifizierung oder Auflösung von Mehrfachsignalen im Empfangssignal durch Mehrfachreflexionen des Sendesignals an Mehrfachzielen.

Die Distanzmesstechnik WFD erlaubt das Anmessen von Mehrfachzielen. Sind die zugehörigen Distanzen von zwei gleichzeitig angestrahlten Zielobjekten ausreichend weit auseinander, so sind die erfassten Signalpulse in einer Empfangseinheit zwar zeitlich trennbar, aber noch nicht eindeutig gelöst. Es können beispielsweise Reflexionen an Metallrohren oder Fensterscheiben auftreten, wobei Zielobjekte in die räumliche Messrichtung eingespiegelt werden, welche unerwünscht sind. Ist hingegen der Empfangsimpuls bezüglich seiner Signalform verzerrt oder verbreitert, so können die Doppelziele nicht mit ausreichender Genauigkeit aufgelöst werden und die Messung wird verworfen.

Insbesondere ideal ist beispielsweise eine Anordnung von Strahldivergenzen derart, dass eine Empfangseinheit einen FOV-Winkel aufweist, der genau gleich ist zur Divergenz eines ausgesendeten Laserstrahls als Träger des ausgesendeten Sendesignals. Bei dieser Anordnung können übriggebliebene, störende Mehrfachreflexe mittels des WFD-Prinzips durch allfällige Verzerrungen der Signalform, z.B. eine Pulsverbreiterung, erkannt werden.

Die Dimensionierung gleicher Divergenzen von Sender und Empfänger ist hauptsächlich geeignet für langsame Scanbewegungen und Messungen über kurze Distanzen. Bei langen Distanzen oder schnellen Scanbewegungen hingegen muss die Divergenz des Empfängers typischerweise grösser eingestellt werden. Dies kann beispielsweise durch Parametereingabe eines Benutzers erfolgen, wobei in einem verwendeten EDM-Modul entsprechende Stellelemente vorhanden sein müssen.

Eine weitere Ausführungsform der Erfindung bezieht sich entsprechend darauf, dass das Empfangssignal mittels Wellenform-Digitalisierung ausgewertet wird, wobei das Sendesignal mit einer definierten Strahldivergenz ausgesendet wird und das Empfangssignal mit einer Empfangseinheit derart erfasst wird, dass die Empfangseinheit einen Gesichtsfeldswinkel aufweist, der identisch oder kleiner ist zur Strahldivergenz des Sendesignals.

Zum Beispiel können mittels WFD-Analyse typischerweise Objekte die weniger als 1m, aber mehr als 3cm auseinander liegen über eine Pulsverbreiterungssignatur detektiert und markiert werden. Damit werden beispielsweise winkelförmige Zielobjekte erkannt bei welchen zwei aneinander angrenzende Flächen ähnliche Rückstreuung aufweisen. Eine winkelförmige Oberfläche, bei der eine Fläche stark spiegelt, ist hingegen durch Pulsverbreiterung nicht zu erkennen.

Hier kann die Kenntnis über eine Polarisationskennung ausgenutzt werden, da beispielsweise bei metallischen Oberflächen oder Flächen mit starkem Glanz wie Rohre, bei denen der Laserstrahl wegspiegelt und auf eine weisse Wand trifft, der Polarisationsgrad DOP sehr hoch ist (> 65%). Dadurch lässt sich die spiegelnde Fläche identifizieren.

Beispielsweise kann eine Identifikation einer Mehrfachreflexion anhand eines gemessenen Leistungsverhältnisses zwischen zwei ausgesendeten Polarisationszuständen abgeleitet werden, insbesondere mittels zwei komplementären oder orthogonalen Polarisationszuständen wie z.B. linear polarisierte Strahlungen jeweils in x- und y-Richtung oder links- und rechts-polarisierte Strahlungen.

Erfindungsgemäss wird das Sendesignal als Sendesignalfolge einzelner Teilsignale ausgesendet, wobei der Polarisationszustand einzelner Teilsignale im Rahmen der Bestimmung der Distanz gemäss einer definierten zeitlichen Abfolge verändert wird, insbesondere wobei eine zeitliche Polarisationsfolge von einzelnen komplett polarisierten Teilsignalen erzeugt wird, im Speziellen wobei die Polarisationsfolge zwei zueinander orthogonale komplett linear polarisierte Teilsignale oder zwei zueinander orthogonale komplett zirkular polarisierte Teilsignale umfasst.

Bei Einfachreflexionen an glatten Oberflächen und mikroskopischen Mehrfachreflexionen an rauen Oberflächen sind die den x und y-polarisierten Emissionen zugeordneten empfangenen Intensitäten ($I_x,I_y$) fast gleich. Übersteigt hingegen das gemessene Leistungsverhältnis $I_x/I_y$ beziehungsweise $S1_x/S1_y$ einen gewissen Schwellwert (z.B. um einen Faktor 3), so ist von einer Mehrfachstreuung von mehr als einer Oberfläche oder einer Oberfläche mit Struktur, beispielsweise einer gebürstete Metallfläche, auszugehen.

Eine weitere Ausführungsform der Erfindung ist dadurch gekennzeichnet, dass ein erstes Teilsignal des Sendesignals als komplett linear polarisierte Strahlung oder komplett zirkular polarisierte Strahlung ausgesendet wird, ein zweites Teilsignal des Sendesignals als komplett polarisierte Strahlung mit einem zum ersten Teilsignal orthogonalen Polarisationszustand ausgesendet wird, zumindest Teile des am Zielobjekt reflektierten ersten Teilsignals als erstes Empfangs-Teilsignal und zumindest Teile des am Zielobjekt reflektierten zweiten Teilsignals als zweites Empfangs-Teilsignal erfasst werden, eine erste Intensität eines Teils des ersten Empfangs-Teilsignals gemessen wird, eine zweite Intensität eines Teils des zweiten Empfangs-Teilsignals gemessen wird, basierend auf der ersten Intensität und der zweiten Intensität ein erster Vergleichswert abgeleitet wird, insbesondere ein Intensitätsverhältnis ein Polarisationsgrad (DOP), ein linearer Polarisationsgrad (DOLP) oder ein zirkularer Polarisationsgrad (DOCP), und der erste Vergleichswert für eine Wertung des ersten und/oder zweiten Empfangs-Teilsignals berücksichtigt wird, insbesondere für eine Identifizierung oder Auflösung von Mehrfachsignalen im ersten und/oder zweiten Empfangs-Teilsignal durch Mehrfachreflexionen des ersten und/oder zweiten Teilsignals an Mehrfachzielen.

Zum Beispiel wird das erste Teilsignal als linear polarisierte Strahlung mit einer definierten Polarisationsrichtung ausgesendet und das zweite Teilsignal als linear polarisierte Strahlung mit einer zur Polarisationsrichtung des ersten Teilsignals um 90 Grad gedrehten Polarisationsrichtung ausgesendet. Alternativ kann beispielsweise das erste Teilsignal als zirkular polarisierter Strahl ausgesendet werden, z.B. rechts-zirkular, und das zweite Teilsignal als entgegengesetzt zirkular polarisierter Strahl (hier z.B.: links-zirkular).

In einer weiteren Ausführungsform wird zudem ein drittes Teilsignal des Sendesignals als komplett linear polarisierte Strahlung oder komplett zirkular polarisierte Strahlung ausgesendet, ein viertes Teilsignal des Sendesignals als komplett polarisierte Strahlung mit einem zum dritten Teilsignal orthogonalen Polarisationszustand ausgesendet, zumindest Teile des am Zielobjekt reflektierten dritten Teilsignals als drittes Empfangs-Teilsignal und zumindest Teile des am Zielobjekt reflektierten vierten Teilsignals als viertes Empfangs-Teilsignal erfasst, eine dritte Intensität eines Teils des dritten Empfangs-Teilsignals mit einem ersten Polarisationsanalysator gemessen, eine vierte Intensität eines Teils des vierten Empfangs-Teilsignals mit einem zweiten Polarisationsanalysator gemessen, basierend auf der dritten Intensität und der vierten Intensität ein zweiter Vergleichswert abgeleitet, insbesondere ein Intensitätsverhältnis, ein Polarisationsgrad (DOP), ein linearer Polarisationsgrad (DOLP) oder ein zirkularer Polarisationsgrad (DOCP), und der zweite Vergleichswert für eine Wertung des dritten und/oder vierten Empfangs-Teilsignals berücksichtigt, insbesondere für eine Identifizierung oder Auflösung von Mehrfachsignalen im dritten und/oder vierten Empfangs-Teilsignal durch Mehrfachreflexionen des dritten und/oder vierten Teilsignals an Mehrfachzielen.

Insbesondere wird der erste und/oder zweite Vergleichswert beispielsweise mit einem ersten und/oder zweiten Schwellwert abgeglichen, basierend auf einem Satz definierter Streueigenschaften repräsentativ für mindestens ein Zielobjekt, basierend auf mindestens einem Element der folgenden Gruppe: eine geometrische Oberflächenstruktur; eine Oberflächenporosität; Albedo-Eigenschaften; Reflexionseigenschaften; Absorptionseigenschaften; und Phaseneigenschaften.

Bei Mehrfachreflexionen über mehrere Oberflächen sind die empfangenen Lichtleistungen $I_x/I_y$ zwar oft stark unterschiedlich, Experimente haben aber gezeigt, dass die beiden Parameter bei vielen Fällen nicht ausreichend sind. Für eine robuste Identifikation von Mehrfachreflexen ist daher oft eine weitere Analyse notwendig, beispielsweise eine komplette Polarisationsanalyse und Ermittlung des kompletten oder partiellen Polarisationszustandes der Empfangsstrahlung.

Beispielsweise kann über wenigstens zwei, vier oder eine höhere Anzahl von redundanten Intensitätsmessungen mit an der Empfangseinheit vorgeschalteten Polarisations- und Phasenelementen in sequentieller oder paralleler Anordnung der Polarisationszustand der vom Target rückgestreuten Strahlung gemessen werden, woraus beispielsweise die vier Komponenten des Stokesvektors abgeleitet werden können. Die Empfangseinheit kann wie bei einem Distanzmesser mit einem Avalanche-Photodetektor (APD) oder einem SiPM-Array-Detektor (Silicon Photomultiplier), aber auch mit einem Photodiodenarray oder einer CCD- oder CMOS-Kamera bestückt sein.

Abhängig vom erfassten kompletten oder partiellen Polarisationszustand oder einer für einen Polarisationszustand typischen Polarisationskennung, beispielsweise ein Intensitätsverhältnis bezüglich spezifischen Polarisationsrichtungen, kann das Messergebnis der Distanzmessung beurteilt werden und eine Wertung der Empfangsstrahlung erfolgen.

Zum Beispiel bleibt bei spiegelnden Flächen der Grad der Polarisation (DOP) des Lasers erhalten, beispielsweise jeweils ausgehend von einem hohen Polarisationsgrad von praktisch 100 %, wie ihn Laserdioden oder andere Laser erzeugen. Der Grad der Polarisation der empfangenen Strahlung ist bei spiegelnden Oberflächen, z.B. metallische Flächen oder Retroreflektoren bestehend aus Glaskugeln oder Tripelspiegelstrukturen, entsprechend hoch (z.B. DOP = 65-100 %).

Bei spiegelnden Objekten besteht hingegen die Gefahr, dass wegen dem reflektierten Strahlanteil mehr als eine Oberfläche angemessen wird. Dies kann beispielsweise mittels Verwendung eines WFD-Distanzmessers überprüft werden. Ist im registrierten und zeitlich aufgezeichneten Signal nur ein Empfangsimpuls vorhanden, so ist die spiegelnde Fläche identifiziert und die Gefahr einer Fehlmessung ist gering. Bei zwei unterschiedlichen Signalreturns ist die Wahrscheinlichkeit gross, dass das Signal mit der kleineren Amplitude der spiegelnden Oberfläche zugeordnet werden kann, da spiegelnde Oberflächen einen geringeren Streulichtanteil aufweisen. Weiter ist zum Beispiels auf im Wesentlichen saubere oder staubfreie Fensterscheiben kein Signal oder lediglich ein sehr schwaches Signal zu erwarten.

Eine sichere Zuordnung des Polarisationsgrads erfordert typischerweise eine zeitaufgelöste Polarisationsanalyse im Picosekundenbereich. Zeitaufgelöste Polarimetrie kann beispielsweise mit APD's und zugeordneten Zeitmessschaltungen realisiert werden, wobei auf jedem Stokes-Kanal eine Distanzmessung durchgeführt wird.

Eine weitere Ausführungsform der Erfindung bezieht sich deshalb darauf, dass mindestens eine Polarisationskennung des Sendesignals bekannt ist, insbesondere der Wert mindestens eines Stokes-Parameters; mindestens eine Polarisationskennung des Empfangssignals abgeleitet wird, insbesondere der Wert des mindestens einen Stokes-Parameters; und basierend auf der mindestens einen Polarisationskennung des Sendesignals und/oder der mindestens einen Polarisationskennung des Empfangssignals mindestens ein Wertungsparameter der folgenden Gruppe abgeleitet wird: ein Polarisationsgrad (DOP) des Empfangssignals, insbesondere der Grad der linearen (DOLP) und/oder zirkularen Polarisation (DOCP); ein Polarisationswinkel des Empfangssignals; ein Depolarisationsfaktor zwischen Sendesignal und Empfangssignal, insbesondere als Funktion der Albedo des Zielobjekts; wobei der mindestens eine Wertungsparameter für die Wertung des Empfangssignals beim Verarbeiten des Empfangssignals zur Bestimmung der Distanz zum Zielobjekt berücksichtigt wird, insbesondere wobei ein zeitaufgelöster Verlauf des mindestens einen Wertungsparameters erzeugt wird.

Beispielsweise können für gewisse Standardfälle Mehrfachreflexionen anhand definierter Grenzwerte für den Polarisationsgrad und/oder den Polarisationswinkel identifiziert und/oder analysiert werden, insbesondere abhängig von der Anwendung und allenfalls für die Anwendung spezifischen Streuoberflächen.

Oft zeichnen sich zum Beispiel matte Flächen dadurch aus, dass der Polarisationsgrad DOP des ursprünglich komplett polarisierten Strahls nach der Streuung an diesen Flächen stark reduziert ist. Dies ist insbesondere bei matten Flächen mit nur leichtem Restglanz der Fall.

Weiter ist es beispielsweise möglich, anhand definierten und für gewisse Oberflächen spezifischen DOP-Bereichen matte Flächen mit und ohne Glanz zu unterscheiden, oder Streuungen unter beinahe senkrechtem Einfallswinkel von Streuungen mit senkrechtem Einfallswinkel oder Streuungen mit leicht geneigten Einfallswinkeln zu unterscheiden.

Auch bei schrägem Einfall grösser als 45 Grad auf raue Oberflächen ist der Polarisationsgrad DOP typischerweise klein und in einem für die Oberfläche spezifischen Bereich. Zudem neigen bei schrägem Einfall grösser als 45 Grad Metalle und raue Oberflächen zu elliptischer Polarisation der rückgestreuten Strahlung, wobei sich die Stokes-Komponente S4 und damit der zirkulare Polarisationsgrad DOCP vergrössert.

Insbesondere bei einem sehr kleinen Polarisationsgrad, beispielsweise bei DOP < 15 % können Mehrfachreflexionen mit Gangunterschieden von < 30 mm enthalten sein (Gangunterschiede von > 30 mm werden typischerweise bereits mittels WFD identifiziert). Dies folgt beispielsweise anschaulich daraus, wenn hier zur Anschauung für eine Einfachstreuung eine Depolarisation von 50 % angenommen wird, woraus beispielsweise nach einer dreifach-Streuung an identischen Oberflächen und identischen Einfallswinkeln ein Polarisationsgrad von $0.5^3 = 0.125$ folgt.

Insbesondere für gemessene Polarisationsgrade von DOP = 2 % -10 % sind Mehrfachziele meist gut erkennbar, wobei die Form der Polarisationsellipse typischerweise im Wesentlichen erhalten bleibt, im Speziellen wobei mittels s oder p Einstrahlung typischerweise auch die Ausrichtung der Polarisationsellipse erhalten bleibt. Bei einer linearpolarisierten Einstrahlung mit einer zur s oder p Einstrahlung um 45 Grad gedrehten Polarisationsrichtung hingegen öffnet sich die Ellipse, d.h. S4 wird grösser als Null und die reflektierte Strahlung tendiert gegen zirkular polarisierte Strahlung mit einem zirkularen Polarisationsgrad DOCP>0.

Die Erfindung betrifft weiter ein Distanzmessmodul für die Verwendung in einem Laser-Distanzmessgerät, ausgebildet als handhaltbares Distanzmessgerät, Laserscanner, Profiler, Lasertracker, oder Tachymeter, zur Bestimmung einer Distanz zu einem Zielobjekt mit einer Sendeeinheit zum Aussenden eines Sendesignals, insbesondere einer gepulsten Signalreihe; einer Empfangseinheit zum Empfangen von zumindest Teilen des am Zielobjekt reflektierten Sendesignals als Empfangssignal; und einer Kontroll- und Steuereinheit zum Verarbeiten des Empfangssignals um daraus die Distanz zum Zielobjekt abzuleiten.

Gemäss der vorliegenden Erfindung ist die Sendeeinheit derart ausgebildet, dass das Sendesignal in einem definierten Polarisationszustand ausgesendet wird, insbesondere wobei mindestens eine Polarisationskennung des Polarisationszustands des Sendesignals bekannt ist, im Speziellen der Wert mindestens eines Stokes-Parameters und/oder eine Polarisationsrichtung, und das Sendesignal derart ausgesendet und das Empfangssignal derart erfasst wird, dass eine Polarisationskennung des Polarisationszustands des Sendesignals dem Empfangssignal anhaftet, wobei die Polarisationskennung so gewählt ist, dass sie Indiz dafür ist, ob das Empfangssignal aus einer Einfachreflexion oder einer Mehrfachreflexion des Sendesignals hervorgeht, und durch die Kontroll- und Steuereinheit basierend auf der Polarisationskennung eine Wertung des Empfangssignals abgeleitet wird, wobei die Wertung des Empfangssignals beim Verarbeiten des Empfangssignals zur Bestimmung der Distanz zum Zielobjekt berücksichtigt wird.

In einer weiteren Ausführungsform ist die Sendeeinheit derart ausgebildet, dass das Sendesignal als im Wesentlichen komplett linear oder zirkular polarisierte Strahlung ausgesendet wird.

Erfindungsgemäss ist die Sendeeinheit derart ausgebildet, dass das Sendesignal als Sendesignalfolge einzelner Teilsignale ausgesendet wird, wobei der Polarisationszustand einzelner Teilsignale im Rahmen der Bestimmung der Distanz gemäss einer definierten zeitlichen Abfolge verändert wird, insbesondere wobei eine zeitliche Polarisationsfolge von einzelnen komplett polarisierten Teilsignalen erzeugt wird, im Speziellen wobei die Polarisationsfolge zwei zueinander orthogonale komplett linear polarisierte Teilsignale oder zwei zueinander orthogonale komplett zirkular polarisierte Teilsignale umfasst.

Die Kontroll- und Steuereinheit ist derart ausgebildet, dass das Empfangssignal mittels Wellenform-Digitalisierung ausgewertet wird, insbesondere wobei das Sendesignal mit einer definierten Strahldivergenz ausgesendet wird und das Empfangssignal mit der Empfangseinheit derart erfasst wird, dass die Empfangseinheit einen Gesichtsfeldswinkel aufweist, der identisch oder kleiner ist zur Strahldivergenz des Sendesignals.

Insbesondere ist das Distanzmessmodul derart ausgebildet, dass ein erstes Teilsignal des Sendesignals als komplett linear polarisierte Strahlung oder komplett zirkular polarisierte Strahlung ausgesendet wird, ein zweites Teilsignal des Sendesignals als komplett polarisierte Strahlung mit einem zum ersten Teilsignal orthogonalen Polarisationszustand ausgesendet wird, zumindest Teile des am Zielobjekt reflektierten ersten Teilsignals als erstes Empfangs-Teilsignal und zumindest Teile des am Zielobjekt reflektierten zweiten Teilsignals als zweites Empfangs-Teilsignal erfasst werden, eine erste Intensität eines Teils des ersten Empfangs-Teilsignals gemessen wird, eine zweite Intensität eines Teils des zweiten Empfangs-Teilsignals gemessen wird, basierend auf der ersten Intensität und der zweiten Intensität ein erster Vergleichswert abgeleitet wird, insbesondere ein Intensitätsverhältnis ein Polarisationsgrad (DOP), ein linearer Polarisationsgrad (DOLP) oder ein zirkularer Polarisationsgrad (DOCP), und der erste Vergleichswert für eine Wertung des ersten und/oder zweiten Empfangs-Teilsignals berücksichtigt wird, insbesondere für eine Identifizierung oder Auflösung von Mehrfachsignalen im ersten und/oder zweiten Empfangs-Teilsignal durch Mehrfachreflexionen des ersten und/oder zweiten Teilsignals an Mehrfachzielen.

In einer weiteren Ausführungsform ist das Distanzmessmodul derart ausgebildet, dass ein drittes Teilsignal des Sendesignals als komplett linear polarisierte Strahlung oder komplett zirkular polarisierte Strahlung ausgesendet wird, ein viertes Teilsignal des Sendesignals als komplett polarisierte Strahlung mit einem zum dritten Teilsignal orthogonalen Polarisationszustand ausgesendet wird, zumindest Teile des am Zielobjekt reflektierten dritten Teilsignals als drittes Empfangs-Teilsignal und zumindest Teile des am Zielobjekt reflektierten vierten Teilsignals als viertes Empfangs-Teilsignal erfasst werden, eine dritte Intensität eines Teils des dritten Empfangs-Teilsignals mit einem ersten Polarisationsanalysator gemessen wird, eine vierte Intensität eines Teils des vierten Empfangs-Teilsignals mit einem zweiten Polarisationsanalysator gemessen wird, basierend auf der dritten Intensität und der vierten Intensität ein zweiter Vergleichswert abgeleitet wird, insbesondere ein Intensitätsverhältnis, ein Polarisationsgrad (DOP), ein linearer Polarisationsgrad (DOLP) oder ein zirkularer Polarisationsgrad (DOCP), und der zweite Vergleichswert für eine Wertung des dritten und/oder vierten Empfangs-Teilsignals berücksichtigt wird, insbesondere für eine Identifizierung oder Auflösung von Mehrfachsignalen im dritten und/oder vierten Empfangs-Teilsignal durch Mehrfachreflexionen des dritten und/oder vierten Teilsignals an Mehrfachzielen.

Im Speziellen kann der erste und/oder zweite Vergleichswert mit einem ersten und/oder zweiten Schwellwert abgeglichen werden, basierend auf einem Satz definierter Streueigenschaften repräsentativ für mindestens ein Zielobjekt, basierend auf mindestens einem Element der folgenden Gruppe: eine geometrische Oberflächenstruktur, eine Oberflächenporosität, Albedo-Eigenschaften, Reflexionseigenschaften, Absorptionseigenschaften, und Phaseneigenschaften.

In einer weiteren Ausführungsform ist das Distanzmessmodul derart ausgebildet, dass mindestens eine Polarisationskennung des Sendesignals bekannt ist, insbesondere der Wert mindestens eines Stokes-Parameters; mindestens eine Polarisationskennung des Empfangssignals abgeleitet wird, insbesondere der Wert des mindestens einen Stokes-Parameters; und basierend auf der mindestens einen Polarisationskennung des Sendesignals und/oder der mindestens einen Polarisationskennung des Empfangssignals mindestens ein Wertungsparameter der folgenden Gruppe abgeleitet wird: ein Polarisationsgrad (DOP) des Empfangssignals, insbesondere der Grad der linearen (DOLP) und/oder zirkularen (DOCP) Polarisation; ein Polarisationswinkel des Empfangssignals; ein Depolarisationsfaktor zwischen Sendesignal und Empfangssignal, insbesondere als Funktion der Albedo des Zielobjekts; wobei der mindestens eine Wertungsparameter für die Wertung des Empfangssignals beim Verarbeiten des Empfangssignals zur Bestimmung der Distanz zum Zielobjekt berücksichtigt wird, insbesondere wobei ein zeitaufgelöster Verlauf des mindestens einen Wertungsparameters erzeugt wird.

Die erfindungsgemässe Distanzmessmethode und das erfindungsgemässe Distanzmessmodul werden nachfolgend anhand von in den Zeichnungen schematisch dargestellten Ausführungsbeispielen rein beispielhaft näher beschrieben. Gleiche Elemente sind in den Figuren mit gleichen Bezugszeichen gekennzeichnet. Die beschriebenen Ausführungsformen sind in der Regel nicht massstabsgetreu dargestellt und sie sind auch nicht als Einschränkung zu verstehen.

Im Einzelnen zeigen

Fig. 1a,b: schematische Illustration des Pulslaufzeitverfahrens in einem elektrooptischen Distanzmessgerät nach dem Stand der Technik;

Fig. 2a,b,c: exemplarische Beispiele von Mehrfachreflexionen im Rahmen von Distanzmessungen, beispielsweise bei Messungen an Kanten und Ecken (a), an nassen Oberflächen (b) oder Messungen an Fenstern (c);

Fig. 3: schematisches Blockdiagramm der Signal- und Datenanalyse zur erfinderischen Behebung von Artefakten durch Mehrfachreflexe;

Fig. 4a,b: typische Ausführungsformen einer Empfangseinheit zur Bestimmung einer Polarisationskennung oder eines Polarisationszustandes einer Empfangsstrahlung;

Fig. 5a,b: beispielhafter Polarimeter-Aufbau für eine instantane Polarisationsmessung basierend auf einer Kombination von zwei Savart-Platten.

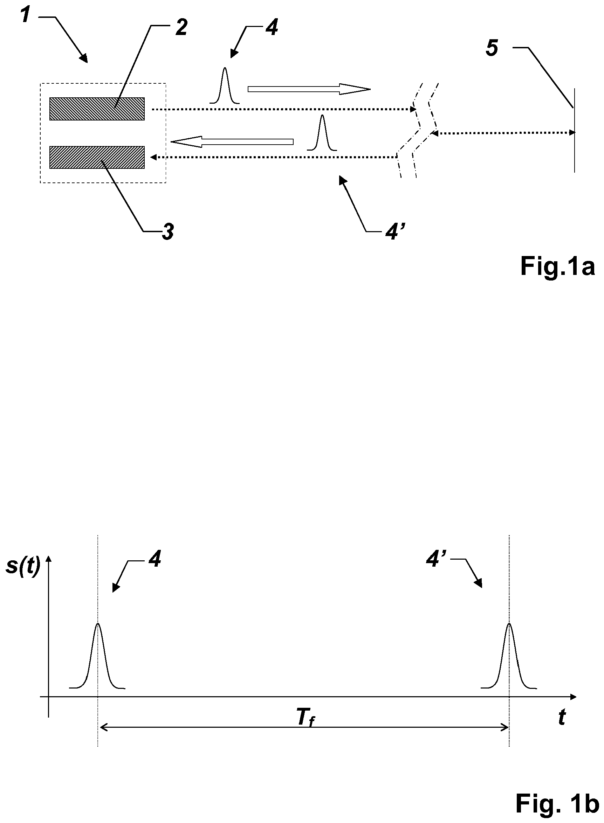

Die Figuren 1a und 1b illustrieren das Pulslaufzeitprinzip wie es in typischen elektro-optischen Distanzmessgeräten nach dem Stand der Technik verwendet wird.

**Figur 1a** zeigt eine Prinzipdarstellung eines elektro-optischen Distanzmessers 1 des Stands der Technik nach dem Pulslaufzeitprinzip. In dem Distanzmesser 1 sind ein Sender 2 und ein Empfänger 3 angeordnet. Der Sender 2 emittiert einen Lichtpuls 4, der nach der Reflektion bzw. Rückstreuung an einem Ziel, z.B. einem kooperativen Zielobjekt wie ein Retroreflektor 5 oder einem unkooperativen Zielobjekt wie eine natürliche Oberfläche, wieder als zurückgestreuter Lichtpuls 4' vom Empfänger 3 detektiert wird. Anstelle der Lichtpulse wird oft auch ein kontinuierlich moduliertes Sendesignal verwendet.

Wie in **Figur 1b** schematisch erläutert, wird die Entfernung aus der Laufzeit $T_f$ als zeitliche Differenz zwischen dem Startzeitpunkt des Aussendens eines Lichtpulses 4 und dem Empfangszeitpunkt des zurückgestreuten Lichtpulses 4' ermittelt. Die Ermittlung des Empfangszeitpunktes erfolgt dabei durch die Auswertung eines Merkmals des Signalimpulses s(t), z.B. durch das Überschreiten einer Signalschwelle oder durch Abtastung des Signalimpulses, wobei nach Identifikation der Codierung des zugehörigen Sendesignals eines empfangenen Signals aus einem definierten Verlaufspunkt des abgetasteten und digitalisierten Signals, beispielsweise den Wendepunkten, den Kurvenmaxima, oder integral mittels eines aus der Zeitinterpolation bekannten Optimum Filters, sehr genau eine Pulslaufzeit bestimmt wird. Eine weitere Methode für die Bestimmung eines definierten Verlaufspunkts umfasst z.B. auch eine Umwandlung des Empfangssignals in ein bipolares Signal und eine anschliessende Bestimmung des Nulldurchgangs.

Bei der zeitlich präzisen Abtastung des zurückgestreuten Pulses wird das vom Detektor erzeugte elektrische Signal mittels eines Analog-Digital-Wandlers ("Analog-Digital-Converter", ADC) in eine digitale Signalfolge umgewandelt, welches anschliessend meistens in Echtzeit weiter verarbeitet wird. Durch die Verwendung einer Vielzahl von Abtastfolgen und/oder zur Emissionsrate synchronem Aufsummieren des Empfangssignals kann ein Nutzsignal auch unter ungünstigen Umständen identifiziert werden, so dass auch grössere Distanzen oder verrauschte bzw. mit Störungen behaftete Hintergrundszenarien bewältigt werden können.

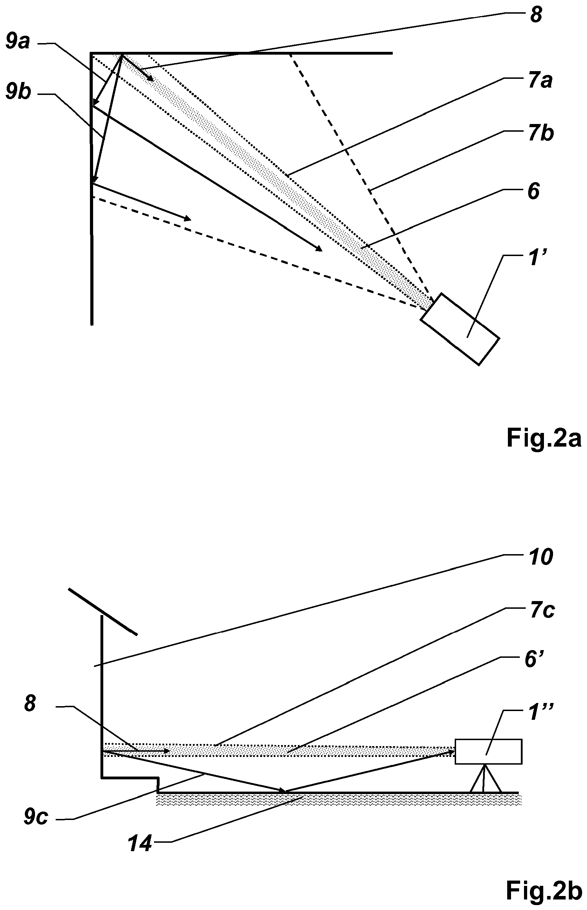

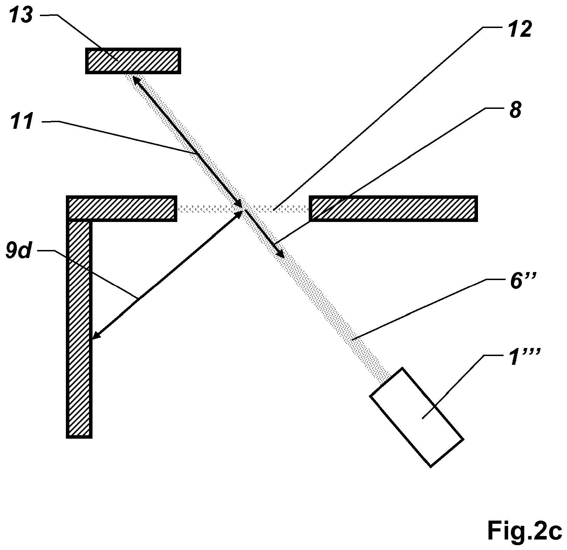

Die Figuren 2a,b,c zeigen exemplarische Beispiele von Mehrfachreflexionen im Rahmen von Distanzmessungen, beispielsweise bei Messungen an Kanten und Ecken (Fig. 2a), sogenannte Streifmessungen, z.B. an nassen Oberflächen (Fig. 2b) oder Messungen an Fenstern (Fig. 2c).

**Figur 2a** zeigt ein erstes Beispiel aus dem Stand der Technik, wobei Artefakte durch Mehrfachstreuungen beispielsweise mittels des WFD-Prinzips und Mehrfachmessungen mit einer Anordnung von unterschiedlichen Strahldivergenzen und/oder Empfangs-FOV-Winkeln identifiziert werden.

Ein elektrooptischer Distanzmesser 1' ist hier derart ausgebildet, dass ein Sendesignal unter einem definierten, in der Regel möglichst kleinen Divergenzwinkel ausgesendet wird, hier im Wesentlichen dargestellt als paralleler Sendestrahl 6 mit konstanter Breite. Ebenfalls angedeutet sind die äusseren Begrenzungen 7a,b zweier unterschiedlicher Gesichtsfeld-Einstellungen (FOV-Einstellungen) eines Empfängers des Distanzmessers 1'. Im Idealfall 8 wird die Strahlung parallel zum Sendestrahl in Richtung Empfänger zurückgestreut.

Abhängig von der Oberflächenbeschaffenheit und den Streueigenschaften der Oberfläche, beispielsweise bedingt durch das Material und die Rauheit der Oberfläche, kann die Strahlung am Streuort aber auch diffus gestreut werden, wobei seitlich weggestreute Strahlung 9a,b unter Mehrfachreflexion ebenfalls wieder zurück zur Empfangseinheit des Distanzmessers 1' gestreut werden kann. Diese Mehrfachreflexionen beeinträchtigen die Distanzmessung und in der Regel ist deshalb ein Distanzmessgerät derart ausgebildet, dass eine Empfangsvorrichtung des Distanzmessgeräts nur über ein sehr kleines Sichtfeld verfügt, wodurch mehrfach reflektierte Rückstrahlung nicht mehr im Gesichtsfeld des Distanzmessgeräts liegt.

Bekannt sind weiter Distanzmesser, welche Mehrfachreflexionen mittels mindestens zwei Messungen mit einstellbaren, unterschiedlich grossen Empfänger-FOV's identifizieren, basierend darauf, dass sich ein Einfluss von schief einfallenden Streustrahlen 9a,b ausschliessen lässt, falls sich die jeweils zugehörige Distanz für die beiden Gesichtsfeldeinstellungen des Empfängers nicht ändert. Allerdings kann auch mit diesem Prinzip im Strahlengang rückwärts reflektiertes Streulicht - hier ursprünglich von der Wand links kommend - nicht eliminiert werden.

Gemäss der vorliegenden Erfindung ist es insbesondere ideal, wenn beispielsweise eine Anordnung von Strahldivergenzen derart gewählt wird, dass eine Empfangseinheit einen FOV-Winkel aufweist, der etwas kleiner oder genau gleich ist zur Divergenz eines ausgesendeten Laserstrahls als Träger des ausgesendeten Sendesignals. Bei dieser Anordnung können übriggebliebene, störende Mehrfachreflexe mittels des WFD-Prinzips durch allfällige Verzerrungen der Signalform, z.B. eine Pulsverbreiterung, erkannt werden.

Die Dimensionierung gleicher Divergenzen von Sender und Empfänger ist allerdings hauptsächlich geeignet für langsame Scanbewegungen und Messungen über kurze Distanzen. Bei langen Distanzen oder schnellen Scanbewegungen hingegen muss die Divergenz des Empfängers typischerweise grösser eingestellt werden. Zudem kann eine winkelförmige Oberfläche, bei der eine Fläche stark spiegelt, unter Umständen nicht durch das WFD-Prinzip, z.B. mittels Pulsverbreiterung, erkannt werden.

**Figur 2b** zeigt illustrativ eine Outdoor-Messung mittels eines Distanzmessgeräts 1", hier für eine Distanzmessung zu einer Hauswand 10. Der Distanzmesser 1" sendet hier wiederum einen Sendestrahl 6' mit einer definierten Strahldivergenz aus. Ebenfalls angedeutet ist die äussere Begrenzung 7c eines möglichst klein gewählten Empfänger-FOVs. Insbesondere bei dieser Anordnung - beispielsweise fern von Kanten und Ecken - kann durch ein möglichst kleines Empfängergesichtsfeld das Mehrfachstreuproblem relativ einfach behoben werden, d.h. seitlich weggestreute Strahlung 9c kann durch das schmale Empfängergesichtsfeld ausgeklammert werden.

Oft werden jedoch Flächen im streifenden Einfall gemessen, so beispielsweise Strassen oder Holzböden welche sich in einem grösseren Abstand zum Vermessungsinstrument befinden. Sind diese Objekte nass, hier beispielsweise eine nasse Strasse 14, so wird ein wesentlicher Teil der Strahlung gespiegelt und trifft womöglich ein Objekt, z.B. eine Hauswand dahinter. Oft ist auch bei trockenen Flächen eine Reflexion zum dahinter liegenden Objekt nicht ausgeschlossen.

Sind die gegenseitigen Abstände ausreichend gross, so können die Objekte mittels des WFD-Prinzips getrennt werden, wobei die gesuchte Distanz in der Regel die kürzere Messdistanz ist.

Sind die Objekte sehr nahe beieinander (weniger als 1m, aber mehr als 3cm) so wird mittels WFD zumindest eine Pulsverbreiterung detektiert. Dies kann beispielsweise beim Anmessen eines Punktes auf dem Boden nahe an einer Wand vorkommen, wobei ein Teil der Laserstrahlung am Boden gespiegelt wird und die Wand trifft. Mittels WFD-Auswertung, z.B. anhand einer Pulsverbreiterung, wird diese Situation jedoch erkannt und die fehlerhafte Messung verworfen.

Kleine Abstände zwischen angestrahlten Zielobjekten, typischerweise Abstände weniger als etwa 3 cm, sind jedoch problematisch und nur schwer mittels WFD-Analyse zu identifizieren, geschweige denn zu kompensieren oder zu beheben. Unter Zuhilfenahme einer Polarisationskennung oder einer Polarisationsanalyse gemäss der vorliegenden Erfindung können solche Mehrfachreflexionen hingegen erkannt und fehlerhafte Messungen verworfen werden.

Beispielsweise weist eine Anzielung eines Objekts im streifenden Einfall mit trockener oder nasser Fläche einen relativ niedrigen Polarisationsgrad auf, sofern dahinter kein metallisch glänzendes Objekt steht.

**Figur 2c** zeigt eine weitere mögliche Entstehung von Mehrfachreflexen und Fehlmessungen eines Distanzmessgeräts 1‴, hier beispielsweise ausgelöst durch Reflexe an Fenstern 12 und dahinter liegenden Objekten 13 auftreten.

Der Distanzmesser 1‴ sendet hier wiederum einen vorzugsweise kollimierten Sendestrahl 6" mit einer definierten durch Beugung bestimmten Strahldivergenz aus. Einerseits treten auch hier wiederum, seitlich weggestreute oder gespiegelte Strahlungen 9d auf, welche zumindest teilweise durch ein schmales Empfängergesichtsfeld ausgeklammert werden können.

Trifft der Strahl 9d hingegen eine helle Oberfläche, so kann ein Teil der an dieser weiteren Fläche gestreuten Strahlung in die einfallende Richtung zurück geworfen und über das Fenster 12 zum Empfänger des Distanzmessers geleitet werden. Dieses weitere Ziel wird zwar vom WFD erkannt und die genaue Distanz ermittelt, dieses fremde Zielobjekt wird aber der Winkelrichtung des gesendeten Laserstrahls zugeordnet, was nicht korrekt ist. Dieser Fehlreflex kann aber durch die erfinderische Methode ebenfalls an seiner Polarisationssignatur erkannt und somit eliminiert werden, dabei ist eine zeitaufgelöste Polarisationsbestimmung mittels der vom WFD detektierten Empfangssignale notwendig. Die den polarisationssensitiven Kanälen zugeordneten Photo- oder Avalanchedioden werden beispielsweise von je einer elektronischen WFD-Schaltung ausgewertet, wodurch jedem Empfangssignal wenigstens ein Stokesparameter zugeordnet wird. In diesem Fall ist aufgrund der Reflexion an der Fensterscheibe die p-Polarisation der Strahlung des Fehlreflexes stärker vertreten als die s-Polarisation und das Leistungsverhältnis $I_x/I_y$, beziehungsweise in Stokes-Schreibweise $S1_x/S1_y$, weicht von 1 ab und kann mit einem Schwellwert verglichen werden.

Weiter wird ein Teil des Lichts 11 durch das Fenster 12 transmittiert, wovon wiederum zumindest ein Teil von einem dahinter liegenden Objekt 13 im Wesentlichen parallel oder koaxial zur Sendestrahlrichtung zum Distanzmesser 1‴ zurückgestreut wird. Dieser Reflex addiert sich als drittes Zielobjekt zur Winkelrichtung des gesendeten Laserstrahls und ist durchwegs gewollt und korrekt. Ist jedoch zum Beispiel die Teildistanz zwischen dem Fenster 12 und dem dahinter liegenden Objekt 13 etwa gleich lang wie die Teildistanz einer seitlich weggestreuten oder gespiegelten Strahlung 9d, so überlagern sich zugehörige reflektierte Empfangssignale, wodurch die ermittelte Distanz verfälscht wird. Mittels des WFD-Prinzips können aber allfällige Verzerrungen der Signalform, wie eine Pulsverbreiterung, erkannt und die entsprechenden Reflexionen eliminiert werden. Ist die Differenz zwischen den Teildistanzen jedoch zu gering, beispielsweise weniger als ca. 3cm, so versagt die Pulsverbreiterungsanalyse des WFD, jedoch kann das Empfangssignal nach der erfinderischen Methode aufgrund der ausserordentlichen Polarisationssignatur trotzdem erkannt werden.

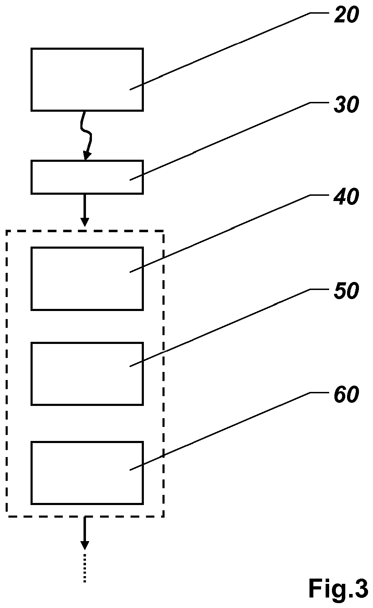

**Figur 3** zeigt ein schematisches Blockdiagramm der Signal- und Datenanalyse zur erfinderischen Behebung von Artefakten durch Mehrfachreflexe anhand von Polarisationskennungen und/oder einer kompletten Polarisationsanalyse.

Ein Zielobjekt wird mit einem Sendesignal in einem definierten Polarisationszustand angestrahlt 20, insbesondere wobei die mindestens eine Polarisationskennung des Polarisationszustands des Sendesignals bekannt ist, beispielsweise durch Aussenden von x und/oder y-polarisierter Strahlung oder von rechts- und/oder linkspolarisierter Strahlung. Dabei kann das Aussenden des Polarisationszustands beispielsweise zeitlich getrennt zuerst in x- und anschliessend in y-Richtung erfolgen. Vorzugsweise werden reine lineare und/oder zirkulare Polarisationszustände wie x-linear polarisiert, y-linear polarisiert, rechts-zirkular polarisiert, links-zirkular polarisiert ausgesendet. Es können aber jegliche mit dem Stokes-Vektor-Formalismus beschreibbare Polarisationszustände ausgesendet und verwendet werden.

Die Erzeugung von zwei Polarisationszuständen kann beispielsweise durch zwei Laseranordnungen erfolgen, wobei der eine Laser in x-Richtung polarisiert und der andere Laser in y-Richtung polarisiert ist. Die Laser können dann in abwechselnder Reihenfolge Pulse emittieren, die zur Distanzmessung und empfängersetigen Polarisationsanalyse angewendet werden. Auch können die beiden Laser eine leicht unterschiedliche Wellenlänge aufweisen, in diesem Fall würde sich eine optisch-spektral selektive Empfängeranordnung anbieten.

Falls die Sendeeinheit mehr als einen Polarisationszustand kodiert und emittiert, kann eine Empfangseinheit 30 beispielsweise ohne jegliche Polarisationsanalyse-Funktionalität ausgestattet sein. Gepaart mit einer polarisationsselektiven Sendeeinheit wie oben beschrieben kann beispielsweise eine zeitlich variierende Intensität bezüglich Strahlung von zu verschiedenen Zeitpunkten ausgesendeten unterschiedlichen Polarisationsrichtungen gemessen und somit eine Polarisationskennung des Polarisationszustands des Empfangssignals abgeleitet werden. Vorzugsweise sind jedoch Sendeeinheit und Empfangseinheit mit polarisationskodierenden beziehungsweise polarisationsanalysierenden Elementen ausgestattet.

Weiter erfolgt beispielsweise eine WFD-Auswertung 40, beispielsweise hinsichtlich Reflexionsgrad einer Oberfläche und/oder einer Identifikation einer Pulsverbreiterung.

Insbesondere ideal ist beispielsweise eine Anordnung von Strahldivergenzen derart, dass eine Empfangseinheit einen FOV-Winkel aufweist, der etwas kleiner oder genau gleich ist zur Divergenz eines ausgesendeten Laserstrahls als Träger des ausgesendeten Sendesignals. Bei dieser Anordnung können übriggebliebene, störende Mehrfachreflexe mittels des WFD-Prinzips durch allfällige Verzerrungen der Signalform, z.B. eine Pulsverbreiterung, erkannt werden.

Sind die Distanzen zugehörig zu zwei gleichzeitig angestrahlten Gegenständen in Bezug auf die Messdistanz ausreichend weit auseinander, so sind die erfassten Signalpulse in der Empfangseinheit zeitlich trennbar, aber noch nicht eindeutig gelöst. Es können beispielsweise Reflexionen an Metallrohren oder Fensterscheiben auftreten, wobei Gegenstände in die räumliche Messrichtung eingespiegelt werden. Zudem ist beispielsweise bei winkelförmigen Zielobjekten mit einer stark spiegelnden Fläche eine Pulsverbreiterung oft nicht zu erkennen.

Zur Auflösung solcher Artefakte erfolgt ein weiterer Analyseschritt 50, wo insbesondere ein gemessenes Leistungsverhältnis zwischen zwei mit unterschiedlicher Polarisation ausgesendeten und rückgestreuten Strahlen analysiert wird, insbesondere zwei ausgesendeten Strahlen mit komplementären Polarisationszuständen wie z.B. linear polarisierte Strahlungen jeweils in x- und y-Richtung oder links- und rechts-polarisierte Strahlungen.

Abhängig von den Oberflächen- und Streueigenschaften sind beispielsweise die den x und y-polarisierten Emissionen zugeordneten Intensitäten ($I_x/I_y$) fast gleich. Übersteigt hingegen das gemessene Leistungsverhältnis $I_x/I_y$ beziehungsweise $S1_x/S1_y$ einen gewissen Schwellwert, beispielsweise 3, so kann eine Mehrfachstreuung abgeleitet werden, z.B. von mehr als einer Oberfläche oder einer Oberfläche mit Struktur, beispielsweise einer gebürsteten Metallfläche.

Bei einer vereinfachten Ausführungsform der Erfindung könnte insbesondere auf die Emission eines zweiten Polarisationszustands der Laserquelle auch verzichtet werden.

Schliesslich kann in einem nächsten Schritt 60 eine Polarisationsanalyse, beispielsweise eine Ermittlung des kompletten (DOP) oder partiellen (DOLP, DOCP, ...) Polarisationszustandes der Empfangsstrahlung erfolgen, wobei abhängig vom erfassten, respektive abgeleiteten, Polarisationszustand ein Ergebnis einer Distanzmessung beurteilt und gewertet wird, insbesondere hinsichtlich Mehrfachreflexionen an unterschiedlichen Oberflächen.

Zum Beispiel sind bei einem sehr kleinen Polarisationsgrad der Empfangsstrahlung von beispielsweise DOP < 20 % Mehrfachreflexionen sehr wahrscheinlich und die Distanzmessung wird verworfen. Anstelle einer Bestimmung des kompletten Polarisationsgrads kann vereinfacht zum Beispiel der lineare Polarisationsgrad ermittelt werden, wobei beispielsweise bei Werten von DOLP < 15 % die Distanzmessung im Regelfall durch optische Artefakte verfälscht ist.

Bei Empfangsstrahlung mit einem sehr hohen Polarisationsgrad wie beispielsweise > 65 % ist zum Beispiel von einer glänzenden Oberfläche auszugehen. Wird zum Beispiel mittels der Wellenform-Digitalisierungseinheit ein einzelnes Zielobjekt ohne Impulsverbreiterung abgeleitet, dann ist die Distanzmessung mit hoher Wahrscheinlichkeit korrekt und ausreichend genau. Werden mittels der Wellenform-Digitalisierungseinheit hingegen beispielsweise zwei Zielobjekte abgeleitet, wobei das weiter entfernte mit einem hohen Polarisationsgrad > 65 % belegt ist, dann kann es sich bei diesem um ein auf die Messrichtung eingespiegeltes Zielobjekt handeln und die Distanzmessung vom weiter entfernten Objekt wird beispielsweise verworfen.

Die durch Mehrfachstreuung erzeugten Artefakte können mittels der aus der Polarisationsanalyse abgeleiteten Polarisationskennzahlen wie den Polarisationsgraden, den Polarisationswinkeln, den Leistungsverhältnissen $I_x/I_y$, beziehungsweise $S1_x/S1_y$, und den zugeordneten Schwellwerten fast beliebig eng eingegrenzt und eliminiert werden.

Insbesondere sei hier angemerkt, dass nicht alle der ob genannten Analyseschritte 40,50,60 zwingend oder gar in der Reihenfolge durchgeführt werden müssen. Sie bilden vielmehr separate Analyse-Werkzeuge für eine verbesserte Identifikation und/oder Kompensation von Distanzmessartefakten aufgrund von Mehrfachreflexen.

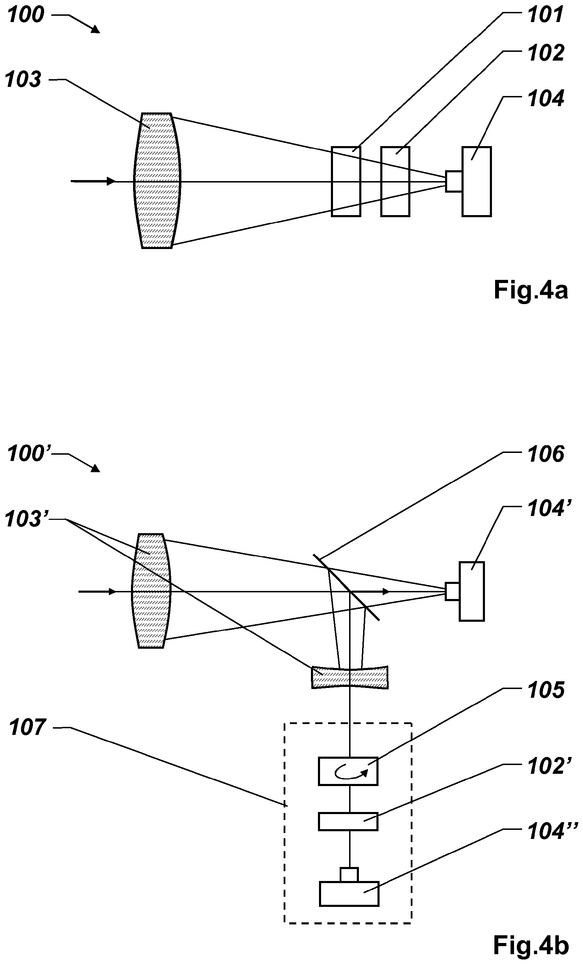

Die Figuren 4a,b zeigen zwei typische Ausführungsformen einer Empfangseinheit zur Bestimmung einer Polarisationskennung oder eines Polarisationszustandes einer Empfangsstrahlung. Im Allgemeinen erfolgt eine komplette Polarisationsmessung mittels einer Messung der rückgestreuten Strahlung in mindestens vier (sequentiellen oder parallelen) Schritten, d.h. eine Messung ohne Filter, eine Messung mit einem ersten Linearpolarisator, eine Messung mit einem zum ersten Linearpolarisator um 45 Grad rotierten Linearpolarisator und eine Messung mit einem Zirkularpolarisator. Daraus lassen sich beispielsweise die vier Stokesparameter ableiten:

$$S1=I_{1=}\ I_p+I_s,\ \ S2=I_p-I_s,\ \ S3=I_{+45}-I_{-45},\ \ S4=S_R-S_L.$$

**Figur 4a** zeigt beispielsweise eine Ausführungsform einer Empfangseinheit 100 mittels eines elektrisch ansteuerbaren elektro-optischen oder akusto-optischen Verzögerungselements 101, beispielsweise einen ferroelektrischen Flüssigkristall (FLC), und einem Polarisator 102, in der Verwendung meist Analysator genannt. Ebenfalls angedeutet ist eine allgemeine Eintrittsoptik 103. Als Detektor 104 kann wie bei einem Distanzmesser ein Avalanche-Photodetektor (APD) oder ein SiPM-Array-Detektor (Silicon Photomultiplier), aber auch ein Photodiodenarray oder ein CCD oder eine CMOS-Kamera verwendet werden.

Eine andere Methode und Ausführungsform einer entsprechenden Empfangseinheit 100', wie in **Figur 4b** dargestellt, besteht darin, eine drehende Phasenverzögerungsplatte 105 zu verwenden, beispielsweise eine $\lambda$/4-Verzögerungsplatte, wiederum in Kombination mit einem Analysator 102', insbesondere ein Linear- oder Zirkular-Polarisator. Während des Drehens der Platte wird die Empfangsleistung nach dem Analysator gemessen und beispielsweise mittels einer aus den Müllermatritzen abgeleiteten Transformation der Stokesvektor bestimmt, insbesondere aus Frequenz, Phase und Amplitude des mit der Phasenplatte erzeugten Signals.

Die Figur zeigt ferner eine allgemeine Eintrittsrespektive Kollimationsoptik 103', sowie beispielsweise ein Umlenkelement 106, z.B. ein semitransparenter Spiegel oder ein Beamsplitter-Würfel. Durch eine Strahlumlenkung kann beispielsweise ein Kanal mit einem separaten Detektor 104' nur zur Intensitäts- und/oder WFD-Analyse für die Signalform- und Distanzmessung verwendet werden, wohingegen ein separater optischer Kanal 107 mit einem weiteren Detektor 104" für eine Polarisationsanalyse verwendet werden kann.

Auch kann der optische Kanal 107 aus zwei parallelen Kanälen mit statischen, also nicht rotierenden Elementen aufgebaut sein, wobei der eine Kanal die lineare Polarisation die bezogen zum Sendelicht parallel ausgerichtet ist analysiert und der andere Kanal eine andere lineare Polarisation analysiert, beispielsweise die um 45Grad verkippte Polarisation. Sind die beiden polarisationsselektiven Kanäle zusätzlich noch mit je einem picosekunden schnellen Detektor versehen, so kann gleichzeitig die Distanz gemessen und die jeweilige Polarisation zu den Impulsen eindeutig zugeordnet werden.

Es sei hier noch angemerkt, dass die Figur nur ein Schema illustriert und das optische Design gegebenenfalls hinsichtlich einer geeigneten Strahlumlenkung für die Polarisationsmessung - beispielsweise keine grossen Umlenkwinkel oder eine Kombinationen mit weiteren optischen Elementen - angepasst sein sollte.

Alternativ kann der separate optische Kanal für die Polarisationsanalyse beispielsweise auch in weitere separate Kanäle mit jeweils entsprechenden Analysatoren, beispielsweise einen ersten Linearpolarisator, einen zum ersten Polarisator um 45 Grad gedrehten Linearpolarisator, sowie einen Zirkularpolarisator, aufgeteilt werden.

Auch bekannt sind sogenannte Stokes-Kameras, wobei die benötigten Polarisationsfilter in einer Matrixstruktur über den Pixeln angeordnet sind, wodurch die Kameras neben dem Intensitätsbild auch den Polarisationszustand der empfangenen Strahlung registrieren.

Bei spektral schmalbandiger Strahlung oder unter Zuhilfenahme von spektralen Filtern, z.B. Beugungsgitter, eignen sich zur effizienten Strahlanalyse auch Polarimeter basierend auf dem Prinzip des Savart-Plate-Interferometers, des Wollaston Polarimeters oder auch des Sagnac-Interferometers, d.h. allgemein Messungen wobei die Polarisationszustände mittels eines Polarisationsmodulators und/oder eines polarisierenden Strahlteilers aufgeteilt werden und von weiteren Elementen wie Phasenplatten und Analysatoren aufbereitet und Photodetektoren oder Kameras zugeleitet werden.

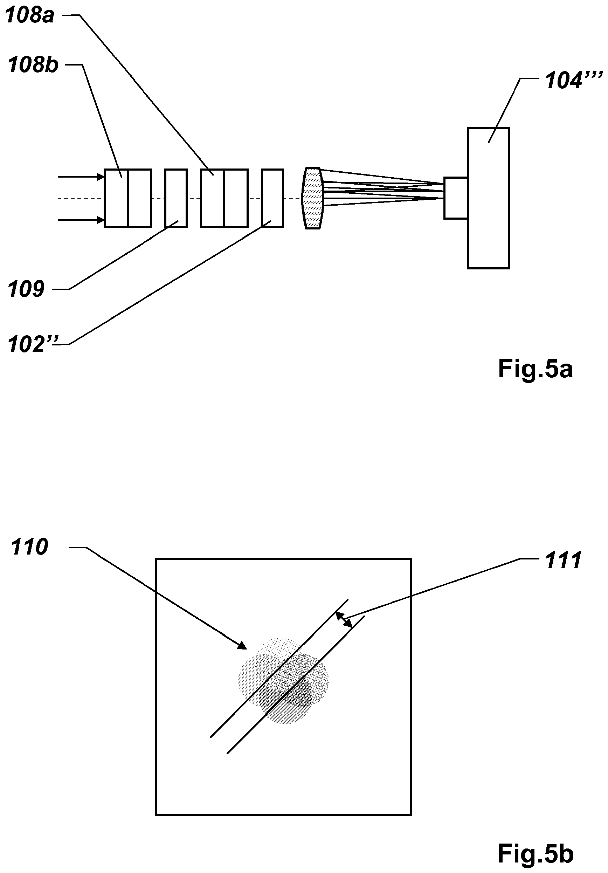

Ein weiterer beispielhafter Polarimeter-Aufbau basierend auf einer Kombination von zwei Savart-Platten 108a,b, mit einer $\lambda$/2- Verzögerungsplatte 109, einem Linearpolarisator unter 45 Grad als Analysator 102", sowie einem Detektor 104''' ist in **Figur 5a** dargestellt. Eine Savart-Platte spaltet einen einkommenden Strahl in seine komplementären (linearen) Polarisationsanteile ("ordinary beam" und "extra-ordinary beam"), wobei der eine Strahl (extra-ordinary beam) parallel zum anderen Strahl versetzt wird. Durch entsprechende Kombination zweier Savart-Platten kann ein einkommender Strahl somit wie in **Figur 5b** gezeigt in vier unterschiedliche Teilstrahlen 110 aufgeteilt und versetzt werden, wobei durch den lateralen Versatz 111 und mittels Fourier-basierter Bildanalyse die zum einfallenden Strahl zugehörigen Stokesparameter abgeleitet werden können. Dadurch kann also beispielsweise eine instantane Polarisationsmessung durchgeführt werden.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

**Patentansprüche**

1.  Distanzmessmethode zur Bestimmung einer Distanz zu einem Zielobjekt mit einem Laser-Distanzmessgerät, ausgebildet als handhaltbares Distanzmessgerät, Laserscanner, Profiler, Lasertracker, oder Tachymeter, mit

    • einem Aussenden eines Sendesignals, insbesondere einer gepulsten Signalreihe,
    • einem Empfangen von zumindest Teilen des am Zielobjekt reflektierten Sendesignals als Empfangssignal,
    • einem Verarbeiten des Empfangssignals um daraus die Distanz zum Zielobjekt abzuleiten, wobei das Empfangssignal mittels Wellenform-Digitalisierung (40) ausgewertet wird,
    **dadurch gekennzeichnet, dass**
    • das Sendesignal in einem definierten Polarisationszustand ausgesendet wird (20),
    • das Sendesignal (20) derart ausgesendet und das Empfangssignal derart erfasst wird, dass eine Polarisationskennung des Polarisationszustands des Sendesignals (20) dem Empfangssignal anhaftet, wobei die Polarisationskennung so gewählt ist, dass sie Indiz dafür ist, ob das Empfangssignal aus einer Einfachreflexion oder einer Mehrfachreflexion des Sendesignals (20) hervorgeht, wobei das Sendesignal (20) als polarisationskodiertes Signal aufweisend Teilsignale mit zueinander unterschiedlichen Polarisationszuständen ausgesendet wird, wobei die Teilsignale zeitlich getrennt oder mittels zwei Lasern, welche unterschiedliche Wellenlängen aufweisen, ausgesendet werden, wobei

    ◦ ein erstes Teilsignal in einem ersten definierten Polarisationszustand ausgesendet wird,
    ◦ ein zweites Teilsignal in einem zweiten definierten Polarisationszustand ausgesendet wird,
    ◦ zumindest Teile des am Zielobjekt reflektierten ersten Teilsignals als erstes Empfangs-Teilsignal und zumindest Teile des am Zielobjekt reflektierten zweiten Teilsignals als zweites Empfangs-Teilsignal erfasst werden,
    ◦ eine erste Intensität des ersten Empfangs-Teilsignals gemessen wird,
    ◦ eine zweite Intensität des zweiten Empfangs-Teilsignals gemessen wird, und
    ◦ basierend auf der ersten Intensität und der zweiten Intensität ein erster Vergleichswert abgeleitet wird (50) hinsichtlich des Intensitätsverhältnisses zwischen der ersten und der zweiten Intensität,

    und
    • basierend auf dem ersten Vergleichswert eine Wertung des Empfangssignals abgeleitet wird,

    wobei die Wertung des Empfangssignals beim Verarbeiten des Empfangssignals zur Bestimmung der Distanz zum Zielobjekt zum Identifizieren oder Kompensieren von durch Mehrfachreflexion erzeugten Distanzmessartefakten berücksichtigt wird.

2.  Distanzmessmethode nach Anspruch 1,
    **dadurch gekennzeichnet, dass**
    das erste und das zweite Teilsignal als komplett linear oder zirkular polarisierte Strahlung ausgesendet werden.

3.  Distanzmessmethode nach Anspruch 1,
    **dadurch gekennzeichnet, dass**

    das Sendesignal (20) als Sendesignalfolge einzelner Teilsignale ausgesendet wird, wobei der Polarisationszustand einzelner Teilsignale im Rahmen der Bestimmung der Distanz gemäss einer definierten zeitlichen Abfolge verändert wird,
    insbesondere wobei eine zeitliche Polarisationsfolge von einzelnen komplett polarisierten Teilsignalen erzeugt wird,
    im Speziellen wobei die Polarisationsfolge

    • zwei zueinander orthogonale komplett linear polarisierte Teilsignale oder
    • zwei zueinander orthogonale komplett zirkular polarisierte Teilsignale

    umfasst.

4.  Distanzmessmethode nach einem der vorhergehenden Ansprüche,
    **dadurch gekennzeichnet, dass**
    das Sendesignal (20) mit einer definierten Strahldivergenz ausgesendet wird und das Empfangssignal mit einer Empfangseinheit derart erfasst wird, dass die Empfangseinheit einen Gesichtsfeldswinkel aufweist, der identisch oder kleiner ist zur Strahldivergenz des Sendesignals (20).

5. Distanzmessmethode nach einem der vorhergehenden Ansprüche, **dadurch gekennzeichnet, dass**

   • das erste Teilsignal des Sendesignals (20) als komplett linear polarisierte Strahlung oder komplett zirkular polarisierte Strahlung ausgesendet wird,
   • das zweite Teilsignal des Sendesignals (20) als komplett polarisierte Strahlung mit einem zum ersten Teilsignal orthogonalen Polarisationszustand ausgesendet wird, und
   • der erste Vergleichswert für eine Wertung des ersten und/oder zweiten Empfangs-Teilsignals berücksichtigt wird, insbesondere für eine Identifizierung oder Auflösung von Mehrfachsignalen im ersten und/oder zweiten Empfangs-Teilsignal durch Mehrfachreflexionen des ersten und/oder zweiten Teilsignals an Mehrfachzielen.

6. Distanzmessmethode nach einem der vorhergehenden Ansprüche, **dadurch gekennzeichnet, dass**

   • ein drittes Teilsignal des Sendesignals (20) als komplett linear polarisierte Strahlung oder komplett zirkular polarisierte Strahlung ausgesendet wird,
   • ein viertes Teilsignal des Sendesignals (20) als komplett polarisierte Strahlung mit einem zum dritten Teilsignal orthogonalen Polarisationszustand ausgesendet wird,
   • zumindest Teile des am Zielobjekt reflektierten dritten Teilsignals als drittes Empfangs-Teilsignal und zumindest Teile des am Zielobjekt reflektierten vierten Teilsignals als viertes Empfangs-Teilsignal erfasst werden,
   • eine dritte Intensität des dritten Empfangs-Teilsignals mit einem ersten Polarisationsanalysator gemessen wird,
   • eine vierte Intensität des vierten Empfangs-Teilsignals mit einem zweiten Polarisationsanalysator gemessen wird,
   • basierend auf der dritten Intensität und der vierten Intensität ein zweiter Vergleichswert abgeleitet wird (50), insbesondere ein Intensitätsverhältnis, ein Polarisationsgrad (DOP), ein linearer Polarisationsgrad (DOLP) oder ein zirkularer Polarisationsgrad (DOCP), und
   • der zweite Vergleichswert für eine Wertung des dritten und/oder vierten Empfangs-Teilsignals berücksichtigt wird, insbesondere für eine Identifizierung oder Auflösung von Mehrfachsignalen im dritten und/oder vierten Empfangs-Teilsignal durch Mehrfachreflexionen des dritten und/oder vierten Teilsignals an Mehrfachzielen.

7. Distanzmessmethode nach einem der Ansprüche 5 oder 6, **dadurch gekennzeichnet, dass** der erste bzw. der zweite Vergleichswert mit einem ersten bzw. einem zweiten Schwellwert abgeglichen wird basierend auf einem Satz definierter Streueigenschaften repräsentativ für mindestens ein Zielobjekt, basierend auf mindestens einem Element der folgenden Gruppe

   • eine geometrische Oberflächenstruktur,
   • eine Oberflächenporosität,
   • Albedo-Eigenschaften,
   • Reflexionseigenschaften,
   • Absorptionseigenschaften, und
   • Phaseneigenschaften.

8. Distanzmessmethode nach einem der vorhergehenden Ansprüche, **dadurch gekennzeichnet, dass**

   • mindestens eine Polarisationskennung des Sendesignals (20) bekannt ist, insbesondere der Wert mindestens eines Stokes-Parameters,
   • mindestens eine Polarisationskennung des Empfangssignals abgeleitet wird, insbesondere der Wert des mindestens einen Stokes-Parameters, und
   • basierend auf der mindestens einen Polarisationskennung des Sendesignals (20) und/oder der mindestens einen Polarisationskennung des Empfangssignals mindestens ein Wertungsparameter der folgenden Gruppe abgeleitet wird (60):

      ∘ ein Polarisationsgrad (DOP) des Empfangssignals, insbesondere der Grad der linearen (DOLP) und/oder zirkularen (DOCP) Polarisation,

◦ ein Polarisationswinkel des Empfangssignals,
◦ ein Depolarisationsfaktor zwischen Sendesignal (20) und Empfangssignal, insbesondere als Funktion der Albedo des Zielobjekts,

wobei der mindestens eine Wertungsparameter für die Wertung des Empfangssignals beim Verarbeiten des Empfangssignals zur Bestimmung der Distanz zum Zielobjekt berücksichtigt wird, insbesondere wobei ein im Picosekundenbereich zeitaufgelöster Verlauf des mindestens einen Wertungsparameters erzeugt wird.

9. Distanzmessmodul, konfiguriert für die Verwendung in einem Laser-Distanzmessgerät ausgebildet als handhaltbares Distanzmessgerät, Laserscanner, Profiler, Lasertracker, oder Tachymeter, zur Bestimmung einer Distanz zu einem Zielobjekt mit

   • einer Sendeeinheit zum Aussenden eines Sendesignals, insbesondere einer gepulsten Signalreihe,
   • einer Empfangseinheit zum Empfangen von zumindest Teilen des am Zielobjekt reflektierten Sendesignals als Empfangssignal,
   • einer Kontroll- und Steuereinheit zum Verarbeiten des Empfangssignals um daraus die Distanz zum Zielobjekt abzuleiten, wobei die Kontroll- und Steuereinheit derart ausgebildet ist, dass das Empfangssignal mittels Wellenform-Digitalisierung (40) ausgewertet wird,
   **dadurch gekennzeichnet, dass**
   • die Sendeeinheit und die Empfangseinheit (30,100,100') derart ausgebildet sind, dass

      o das Sendesignal (20) in einem definierten Polarisationszustand ausgesendet wird, und
      o das Sendesignal (20) derart ausgesendet und das Empfangssignal derart erfasst wird, dass eine Polarisationskennung des Polarisationszustands des Sendesignals (20) dem Empfangssignal anhaftet, wobei die Polarisationskennung so gewählt ist, dass sie Indiz dafür ist, ob das Empfangssignal aus einer Einfachreflexion oder einer Mehrfachreflexion des Sendesignals (20) hervorgeht, wobei das Sendesignal (20) als polarisationskodiertes Signal aufweisend Teilsignale mit zueinander unterschiedlichen Polarisationszuständen ausgesendet wird, wobei die Teilsignale zeitlich getrennt oder mittels zwei Lasern, welche unterschiedliche Wellenlängen aufweisen, ausgesendet werden, wobei

         □ ein erstes Teilsignal in einem ersten definierten Polarisationszustand ausgesendet wird,
         □ ein zweites Teilsignal in einem zweiten definierten Polarisationszustand ausgesendet wird,
         □ zumindest Teile des am Zielobjekt reflektierten ersten Teilsignals als erstes Empfangs-Teilsignal und zumindest Teile des am Zielobjekt reflektierten zweiten Teilsignals als zweites Empfangs-Teilsignal erfasst werden,
         □ eine erste Intensität des ersten Empfangs-Teilsignals gemessen wird, und
         □ eine zweite Intensität des zweiten Empfangs-Teilsignals gemessen wird,

      und

   • durch die Kontroll- und Steuereinheit basierend auf der ersten Intensität und der zweiten Intensität ein erster Vergleichswert abgeleitet wird (50) hinsichtlich des Intensitätsverhältnisses zwischen der ersten und der zweiten Intensität, und basierend auf dem ersten Vergleichswert eine Wertung des Empfangssignals abgeleitet wird, wobei die Wertung des Empfangssignals beim Verarbeiten des Empfangssignals zur Bestimmung der Distanz zum Zielobjekt zum Identifizieren oder Kompensieren von durch Mehrfachreflexion erzeugten Distanzmessartefakten berücksichtigt wird,
   insbesondere wobei die Sendeeinheit derart ausgebildet ist, dass das erste und das zweite Teilsignal als komplett linear oder zirkular polarisierte Strahlung ausgesendet werden.

10. Distanzmessmodul nach Anspruch 9,
    **dadurch gekennzeichnet, dass**

    die Sendeeinheit derart ausgebildet ist, dass das Sendesignal (20) als Sendesignalfolge einzelner Teilsignale ausgesendet wird, wobei der Polarisationszustand einzelner Teilsignale im Rahmen der Bestimmung der Distanz gemäss einer definierten zeitlichen Abfolge verändert wird,
    insbesondere wobei eine zeitliche Polarisationsfolge von einzelnen komplett polarisierten Teilsignalen erzeugt wird,
    im Speziellen wobei die Polarisationsfolge

• zwei zueinander orthogonale komplett linear polarisierte Teilsignale oder
• zwei zueinander orthogonale komplett zirkular polarisierte Teilsignale

umfasst.

**11.** Distanzmessmodul nach einem der Ansprüche 9 bis 10, **dadurch gekennzeichnet, dass**
das Distanzmessmodul konfiguriert ist, dass das Sendesignal (20) mit einer definierten Strahldivergenz ausgesendet wird und das Empfangssignal mit der Empfangseinheit (30,100,100') derart erfasst wird, dass die Empfangseinheit (30,100,100') einen Gesichtsfeldswinkel aufweist, der identisch oder kleiner ist zur Strahldivergenz des Sendesignals (20).

**12.** Distanzmessmodul nach einem der Ansprüche 9 bis 11, **dadurch gekennzeichnet, dass**
das Distanzmessmodul derart ausgebildet ist, dass

• das erste Teilsignal des Sendesignals (20) als komplett linear polarisierte Strahlung oder komplett zirkular polarisierte Strahlung ausgesendet wird,
• das zweite Teilsignal des Sendesignals (20) als komplett polarisierte Strahlung mit einem zum ersten Teilsignal orthogonalen Polarisationszustand ausgesendet wird, und
• der erste Vergleichswert für eine Wertung des ersten und/oder zweiten Empfangs-Teilsignals berücksichtigt wird, insbesondere für eine Identifizierung oder Auflösung von Mehrfachsignalen im ersten und/oder zweiten Empfangs-Teilsignal durch Mehrfachreflexionen des ersten und/oder zweiten Teilsignals an Mehrfachzielen.

**13.** Distanzmessmodul nach einem der Ansprüche 9 bis 12, **dadurch gekennzeichnet, dass**
das Distanzmessmodul derart ausgebildet ist, dass

• ein drittes Teilsignal des Sendesignals (20) als komplett linear polarisierte Strahlung oder komplett zirkular polarisierte Strahlung ausgesendet wird,
• ein viertes Teilsignal des Sendesignals (20) als komplett polarisierte Strahlung mit einem zum dritten Teilsignal orthogonalen Polarisationszustand ausgesendet wird,
• zumindest Teile des am Zielobjekt reflektierten dritten Teilsignals als drittes Empfangs-Teilsignal und zumindest Teile des am Zielobjekt reflektierten vierten Teilsignals als viertes Empfangs-Teilsignal erfasst werden,
• eine dritte Intensität des dritten Empfangs-Teilsignals mit einem ersten Polarisationsanalysator gemessen wird,
• eine vierte Intensität des vierten Empfangs-Teilsignals mit einem zweiten Polarisationsanalysator gemessen wird,
• basierend auf der dritten Intensität und der vierten Intensität ein zweiter Vergleichswert abgeleitet wird (50), insbesondere ein Intensitätsverhältnis, ein Polarisationsgrad (DOP), ein linearer Polarisationsgrad (DOLP) oder ein zirkularer Polarisationsgrad (DOCP), und
• der zweite Vergleichswert für eine Wertung des dritten und/oder vierten Empfangs-Teilsignals berücksichtigt wird, insbesondere für eine Identifizierung oder Auflösung von Mehrfachsignalen im dritten und/oder vierten Empfangs-Teilsignal durch Mehrfachreflexionen des dritten und/oder vierten Teilsignals an Mehrfachzielen.

**14.** Distanzmessmodul nach Anspruch 12 oder 13,
**dadurch gekennzeichnet, dass**
der erste bzw. der zweite Vergleichswert mit einem ersten bzw. einem zweiten Schwellwert abgeglichen wird basierend auf einem Satz definierter Streueigenschaften repräsentativ für mindestens ein Zielobjekt, basierend auf mindestens einem Element der folgenden Gruppe

• eine geometrische Oberflächenstruktur,
• eine Oberflächenporosität,
• Albedo-Eigenschaften,
• Reflexionseigenschaften,
• Absorptionseigenschaften, und
• Phaseneigenschaften.

**15.** Distanzmessmodul nach einem der Ansprüche 9 bis 14, **dadurch gekennzeichnet, dass**

das Distanzmessmodul derart ausgebildet ist, dass

• mindestens eine Polarisationskennung des Sendesignals (20) bekannt ist, insbesondere der Wert mindestens eines Stokes-Parameters,
• mindestens eine Polarisationskennung des Empfangssignals abgeleitet wird, insbesondere der Wert des mindestens einen Stokes-Parameters, und
• basierend auf der mindestens einen Polarisationskennung des Sendesignals (20) und/oder der mindestens einen Polarisationskennung des Empfangssignals mindestens ein Wertungsparameter der folgenden Gruppe abgeleitet wird (60):

    o ein Polarisationsgrad (DOP) des Empfangssignals, insbesondere der Grad der linearen (DOLP) und/oder zirkularen (DOCP) Polarisation,
    o ein Polarisationswinkel des Empfangssignals,
    o ein Depolarisationsfaktor zwischen Sendesignal (20) und Empfangssignal, insbesondere als Funktion der Albedo des Zielobjekts,

wobei der mindestens eine Wertungsparameter für die Wertung des Empfangssignals beim Verarbeiten des Empfangssignals zur Bestimmung der Distanz zum Zielobjekt berücksichtigt wird, insbesondere wobei ein im Picosekundenbereich zeitaufgelöster Verlauf des mindestens einen Wertungsparameters erzeugt wird.

## Claims

1. Distance measuring method for determining a distance to a target object with a laser distance measuring device, embodied as a hand-held distance measuring device, laser scanner, profiler, laser tracker, or tachymeter, comprising

    • emitting a transmitted signal, in particular a pulsed signal series,
    • receiving at least parts of the transmitted signal reflected on the target object as a received signal,
    • processing the received signal to derive the distance to the target object therefrom, wherein the received signal is analyzed by means of waveform digitization (40),
    **characterized in that**
    • the transmitted signal is emitted in a defined polarization state (20),
    • the transmitted signal (20) is emitted and the received signal is acquired such that a polarization identifier of the polarization state of the transmitted signal (20) adheres to the received signal, wherein the polarization identifier is selected so that it is an indication for whether the received signal originates from a single reflection or a multiple reflection of the transmitted signal (20), wherein the transmitted signal (20) is emitted as a polarization-coded signal comprising partial signals with mutually different polarization states, wherein the partial signals are emitted at different times or by means of two lasers which have different wavelengths, wherein

        o a first partial signal is emitted in a first defined polarization state,
        o a second partial signal is emitted in a second defined polarization state,
        o at least parts of the first partial signal reflected on the target object are acquired as a first received partial signal and at least parts of the second partial signal reflected on the target object are acquired as a second received partial signal,
        o a first intensity of the first received partial signal is measured,
        o a second intensity of the second received partial signal is measured, and
        o based on the first intensity and the second intensity, a first comparison value is derived (50) with regard to the intensity ratio between the first and the second intensity,

    and
    • based on the first comparison value, an evaluation of the received signal is derived,

wherein the evaluation of the received signal is taken into consideration during the processing of the received signal to determine the distance to the target object to identify or compensate distance measurement artifacts caused by multiple reflection.

2. Distance measuring method according to Claim 1, **characterized in that** the first and the second partial signal are emitted as completely linearly or circularly polarized radiation.

3. Distance measuring method according to Claim 1, **characterized in that** the transmitted signal (20) is emitted as a transmitted signal sequence of individual partial signals, wherein the polarization state of individual partial signals is changed in the scope of the determination of the distance according to a defined chronological sequence,

in particular wherein a chronological polarization sequence of individual completely polarized partial signals is generated,
especially wherein the polarization sequence comprises

- two completely linearly polarized partial signals orthogonal in relation to one another or
- two completely circularly polarized partial signals orthogonal in relation to one another.

4. Distance measuring method according to any one of the preceding claims,
**characterized in that**
the transmitted signal (20) is emitted having a defined beam divergence and the received signal is acquired using a receiving unit such that the receiving unit has a field of vision angle, which is identical to or less than the beam divergence of the transmitted signal (20).

5. Distance measuring method according to any one of the preceding claims,
**characterized in that**

- the first partial signal of the transmitted signal (20) is emitted as completely linearly polarized radiation or completely circularly polarized radiation,
- the second partial signal of the transmitted signal (20) is emitted as completely polarized radiation having a polarization state orthogonal in relation to the first partial signal, and
- the first comparison value is taken into consideration for an evaluation of the first and/or second received partial signal, in particular for an identification or a resolving of multiple signals in the first and/or second received partial signal due to multiple reflections of the first and/or second partial signal on multiple targets.

6. Distance measuring method according to any one of the preceding claims,
**characterized in that**

- a third partial signal of the transmitted signal (20) is emitted as completely linearly polarized radiation or completely circularly polarized radiation,
- a fourth partial signal of the transmitted signal (20) is emitted as completely polarized radiation having a polarization state orthogonal in relation to the third partial signal,
- at least parts of the third partial signal reflected on the target object are acquired as a third received partial signal and at least parts of the fourth partial signal reflected on the target object are acquired as a fourth received partial signal,
- a third intensity of the third received partial signal is measured using a first polarization analyzer,
- a fourth intensity of the fourth received partial signal is measured using a second polarization analyzer,
- based on the third intensity and the fourth intensity, a second comparison value is derived (50), in particular an intensity ratio, a degree of polarization (DOP), a degree of linear polarization (DOLP), or a degree of circular polarization (DOCP), and
- the second comparison value is taken into consideration for an evaluation of the third and/or fourth received partial signal, in particular for an identification or a resolving of multiple signals in the third and/or fourth received partial signal due to multiple reflections of the third and/or fourth partial signal on multiple targets.

7. Distance measuring method according to either of Claims 5 and 6,
**characterized in that** the first or the second comparison value is compared to a first or second threshold value based on a set of defined scattering properties representative of at least one target object, based on at least one element of the following group

- a geometrical surface structure,
- a surface porosity,
- albedo properties,
- reflection properties,
- absorption properties, and
- phase properties.

**8.** Distance measuring method according to any one of the preceding claims, **characterized in that**

• at least one polarization identifier of the transmitted signal (20) is known, in particular the value of at least one Stokes parameter,
• at least one polarization identifier of the received signal is derived, in particular the value of the at least one Stokes parameter, and
• based on the at least one polarization identifier of the transmitted signal (20) and/or the at least one polarization identifier of the received signal, at least one evaluation parameter of the following group is derived (60) :

o a degree of polarization (DOP) of the received signal, in particular the degree of linear (DOLP) and/or circular (DOCP) polarization,
o an angle of polarization of the received signal,
o a depolarization factor between transmitted signal (20) and received signal, in particular as a function of the albedo of the target object,

wherein the at least one evaluation parameter is taken into consideration for the evaluation of the received signal during the processing of the received signal to determine the distance to the target object, in particular wherein a progress which has a time resolution in the picosecond range of the at least one evaluation parameter is generated.

**9.** Distance measuring module, configured for use in a laser distance measuring device embodied as a hand-held distance measuring device, laser scanner, profiler, laser tracker, or tachymeter, for determining a distance to a target object comprising

• a transmitting unit for emitting a transmitted signal, in particular a pulsed signal series,
• a receiving unit for receiving at least parts of the transmitted signal reflected on the target object as a received signal,
• a monitoring and control unit for processing the received signal to derive the distance to the target object therefrom, wherein the monitoring and control unit is configured such that the received signal is analyzed by means of waveform digitization (40),
**characterized in that**
• the transmitting unit and the receiving unit (30, 100, 100') are configured such that

o the transmitted signal (20) is emitted in a defined polarization state, and
o the transmitted signal (20) is emitted and the received signal is acquired such that a polarization identifier of the polarization state of the transmitted signal (20) adheres to the received signal, wherein the polarization identifier is selected so that it is an indication for whether the received signal originates from a single reflection or a multiple reflection of the transmitted signal (20), wherein the transmitted signal (20) is emitted as a polarization-coded signal comprising partial signals with mutually different polarization states, wherein the partial signals are emitted at different times or by means of two lasers which have different wavelengths, wherein

▪ a first partial signal is emitted in a first defined polarization state,
▪ a second partial signal is emitted in a second defined polarization state,
▪ at least parts of the first partial signal reflected on the target object are acquired as a first received partial signal and at least parts of the second partial signal reflected on the target object are acquired as a second received partial signal,
▪ a first intensity of the first received partial signal is measured,
▪ a second intensity of the second received partial signal is measured,

and

• based on the first intensity and the second intensity, a first comparison value is derived (50) with regard to the intensity ratio between the first and the second intensity by the monitoring and control unit, and based on the first comparison value, an evaluation of the received signal is derived,
wherein the evaluation of the received signal is taken into consideration during the processing of the received signal to determine the distance to the target object to identify or compensate distance measurement artifacts caused by multiple reflection,

in particular wherein the transmitting unit is configured such that the first and the second partial signal is emitted as completely linearly or circularly polarized radiation.

10. Distance measuring module according to Claim 9,

**characterized in that** the transmitting unit is configured such that the transmitted signal (20) is emitted as a transmitted signal sequence of individual partial signals, wherein the polarization state of individual partial signals is changed in the scope of the determination of the distance according to a defined chronological sequence, in particular wherein a chronological polarization sequence of individual completely polarized partial signals is generated,
especially wherein the polarization sequence comprises

• two completely linearly polarized partial signals orthogonal in relation to one another or
• two completely circularly polarized partial signals orthogonal in relation to one another.

11. Distance measuring module according to either of Claims 9 and 10,
**characterized in that**
distance measuring module is configured that the transmitted signal (20) is emitted with a defined beam divergence and the received signal is acquired using the receiving unit (30, 100, 100') such that the receiving unit (30, 100, 100') has a field of vision angle which is identical to or less than the beam divergence of the transmitted signal (20).

12. Distance measuring module according to any one of Claims 9 to 11,
**characterized in that** the distance measuring module is configured such that

• the first partial signal of the transmitted signal (20) is emitted as completely linearly polarized radiation or completely circularly polarized radiation,
• the second partial signal of the transmitted signal (20) is emitted as completely polarized radiation having a polarization state orthogonal in relation to the first partial signal, and
• the first comparison value is taken into consideration for an evaluation of the first and/or second received partial signal, in particular for an identification or a resolving of multiple signals in the first and/or second received partial signal due to multiple reflections of the first and/or second partial signal on multiple targets.

13. Distance measuring module according to any one of Claims 9 to 12,
**characterized in that** the distance measuring module is configured such that

• a third partial signal of the transmitted signal (20) is emitted as completely linearly polarized radiation or completely circularly polarized radiation,
• a fourth partial signal of the transmitted signal (20) is emitted as completely polarized radiation having a polarization state orthogonal in relation to the third partial signal,
• at least parts of the third partial signal reflected on the target object are acquired as a third received partial signal and at least parts of the fourth partial signal reflected on the target object are acquired as a fourth received partial signal,
• a third intensity of the third received partial signal is measured using a first polarization analyzer,
• a fourth intensity of the fourth received partial signal is measured using a second polarization analyzer,
• based on the third intensity and the fourth intensity, a second comparison value is derived (50), in particular an intensity ratio, a degree of polarization (DOP), a degree of linear polarization (DOLP), or a degree of circular polarization (DOCP), and
• the second comparison value is taken into consideration for an evaluation of the third and/or fourth received partial signal, in particular for an identification or a resolving of multiple signals in the third and/or fourth received partial signal due to multiple reflections of the third and/or fourth partial signal on multiple targets.

14. Distance measuring module according to Claim 12 or 13,
**characterized in that** the first or the second comparison value is compared to a first or a second threshold value based on a set of defined scattering properties representative of at least one target object, based on at least one element of the following group

• a geometrical surface structure,
• a surface porosity,

• albedo properties,
• reflection properties,
• absorption properties, and
• phase properties.

**15.** Distance measuring module according to any one of Claims 9 to 14,

**characterized in that** the distance measuring module is configured such that

• at least one polarization identifier of the transmitted signal (20) is known, in particular the value of at least one Stokes parameter,
• at least one polarization identifier of the received signal is derived, in particular the value of the at least one Stokes parameter, and
• based on the at least one polarization identifier of the transmitted signal (20) and/or the at least one polarization identifier of the received signal, at least one evaluation parameter of the following group is derived (60) :

o a degree of polarization (DOP) of the received signal, in particular the degree of linear (DOLP) and/or circular (DOCP) polarization,
o an angle of polarization of the received signal,
o a depolarization factor between transmitted signal (20) and received signal, in particular as a function of the albedo of the target object,

wherein the at least one evaluation parameter is taken into consideration for the evaluation of the received signal during the processing of the received signal to determine the distance to the target object, in particular wherein a progress which has a time resolution in the picosecond range of the at least one evaluation parameter is generated.

**Revendications**

**1.** Méthode de mesure de distance pour déterminer une distance par rapport à un objet cible avec un appareil de mesure de distance à laser, conçu comme un appareil de mesure de distance portable, un scanner laser, un profileur, un laser tracker ou un tachymètre, comprenant :

• une émission d'un signal d'émission, en particulier d'une série de signaux pulsés,
• une réception d'au moins des parties du signal d'émission réfléchi sur l'objet cible comme signal de réception,
• un traitement du signal de réception pour en déduire la distance par rapport à l'objet cible, le signal de réception étant évalué au moyen d'une numérisation de forme d'onde (40),
**caractérisée en ce que**
• le signal d'émission est émis (20) dans un état de polarisation défini,
• le signal d'émission (20) est émis et le signal de réception détecté de telle sorte qu'un identifiant de polarisation de l'état de polarisation du signal d'émission (20) soit attaché au signal de réception, l'identifiant de polarisation étant choisi de telle sorte qu'il indique si le signal de réception résulte d'une réflexion simple ou d'une réflexion multiple du signal d'émission (20), le signal d'émission (20) étant émis sous la forme d'un signal codé en polarisation présentant des signaux partiels ayant des états de polarisation différents les uns des autres et les signaux partiels étant émis séparément dans le temps ou au moyen de deux lasers qui présentent des longueurs d'onde différentes,

o un premier signal partiel étant émis dans un premier état de polarisation défini,
o un deuxième signal partiel étant émis dans un deuxième état de polarisation défini,
o au moins des parties du premier signal partiel réfléchi sur l'objet cible étant détectées comme premier signal partiel de réception et au moins des parties du deuxième signal partiel réfléchi sur l'objet cible étant détectées comme deuxième signal partiel de réception,
o une première intensité du premier signal partiel de réception étant mesurée,
o une deuxième intensité du deuxième signal partiel de réception étant mesurée, et
o sur la base de la première intensité et de la deuxième intensité, une première valeur de comparaison étant déduite (50) en ce qui concerne le rapport d'intensité entre la première et la deuxième intensité,

et

• sur la base de la première valeur de comparaison, une évaluation du signal de réception est déduite,

l'évaluation du signal de réception étant prise en compte lors du traitement du signal de réception pour déterminer la distance par rapport à l'objet cible afin d'identifier ou de compenser des artefacts de mesure de distance générés par une réflexion multiple.

2. Méthode de mesure de distance selon la revendication 1,
   **caractérisée en ce que**
   le premier et le deuxième signal partiel sont émis sous la forme d'un rayonnement complètement polarisé linéairement ou circulairement.

3. Méthode de mesure de distance selon la revendication 1,
   **caractérisée en ce que**

   le signal d'émission (20) est émis sous la forme d'une séquence de signaux d'émission de signaux partiels individuels, l'état de polarisation de signaux partiels individuels étant modifié dans le cadre de la détermination de la distance selon une succession temporelle définie,
   en particulier, une séquence de polarisation temporelle de signaux partiels individuels complètement polarisés étant générée,
   la séquence de polarisation comprenant en particulier :

   • deux signaux partiels complètement polarisés linéairement orthogonaux entre eux ou
   • deux signaux partiels complètement polarisés circulairement orthogonaux entre eux.

4. Méthode de mesure de distance selon l'une des revendications précédentes,
   **caractérisée en ce que**
   le signal d'émission (20) est émis avec une divergence de faisceau définie et le signal de réception est détecté par une unité de réception de telle sorte que l'unité de réception présente un angle de champ de vision qui est identique ou inférieur à la divergence de faisceau du signal d'émission (20).

5. Méthode de mesure de distance selon l'une des revendications précédentes,
   **caractérisée en ce que**

   • le premier signal partiel du signal d'émission (20) est émis sous la forme d'un rayonnement complètement polarisé linéairement ou d'un rayonnement complètement polarisé circulairement,
   • le deuxième signal partiel du signal d'émission (20) est émis sous la forme d'un rayonnement complètement polarisé avec un état de polarisation orthogonal au premier signal partiel, et
   • la première valeur de comparaison est prise en compte pour une évaluation du premier et/ou du deuxième signal partiel de réception, en particulier pour une identification ou une résolution de signaux multiples dans le premier et/ou le deuxième signal partiel de réception par des réflexions multiples du premier et/ou du deuxième signal partiel sur des cibles multiples.

6. Méthode de mesure de distance selon l'une des revendications précédentes,
   **caractérisée en ce que**

   • un troisième signal partiel du signal d'émission (20) est émis sous la forme d'un rayonnement complètement polarisé linéairement ou d'un rayonnement complètement polarisé circulairement,
   • un quatrième signal partiel du signal d'émission (20) est émis sous la forme d'un rayonnement complètement polarisé avec un état de polarisation orthogonal au troisième signal partiel,
   • au moins des parties du troisième signal partiel réfléchi sur l'objet cible sont détectées comme troisième signal partiel de réception et au moins des parties du quatrième signal partiel réfléchi sur l'objet cible sont détectées comme quatrième signal partiel de réception,
   • une troisième intensité du troisième signal partiel de réception est mesurée avec un premier analyseur de polarisation,
   • une quatrième intensité du quatrième signal partiel de réception est mesurée avec un deuxième analyseur de polarisation,
   • sur la base de la troisième intensité et de la quatrième intensité, une deuxième valeur de comparaison est déduite (50), en particulier un rapport d'intensité, un degré de polarisation (DOP), un degré de polarisation linéaire (DOLP) ou un degré de polarisation circulaire (DOCP), et
• la deuxième valeur de comparaison est prise en compte pour une évaluation du troisième et/ou du quatrième signal partiel de réception, en particulier pour une identification ou une résolution de signaux multiples dans le troisième et/ou le quatrième signal partiel de réception par des réflexions multiples du troisième et/ou du quatrième signal partiel sur des cibles multiples.

7. Méthode de mesure de distance selon l'une des revendications 5 ou 6, **caractérisée en ce que**
la première, respectivement deuxième valeur de comparaison est comparée à une première, respectivement deuxième valeur seuil sur la base d'un ensemble de propriétés de diffusion définies représentatives d'au moins un objet cible, sur la base d'au moins un élément du groupe suivant :

• une structure de surface géométrique,
• une porosité de surface,
• des propriétés d'albédo,
• des propriétés de réflexion,
• des propriétés d'absorption, et
• des propriétés de phase.

8. Méthode de mesure de distance selon l'une des revendications précédentes,
**caractérisée en ce que**

• au moins un identifiant de polarisation du signal d'émission (20) est connu, en particulier la valeur d'au moins un paramètre de Stokes,
• au moins un identifiant de polarisation du signal de réception est déduit, en particulier la valeur dudit au moins un paramètre de Stokes, et
• sur la base dudit au moins un identifiant de polarisation du signal d'émission (20) et/ou dudit au moins un identifiant de polarisation du signal de réception, au moins un paramètre d'évaluation du groupe suivant est déduit (60) :

o un degré de polarisation (DOP) du signal de réception, en particulier le degré de polarisation linéaire (DOLP) et/ou circulaire (DOCP),
o un angle de polarisation du signal de réception,
o un facteur de dépolarisation entre le signal d'émission (20) et le signal

de réception, en particulier en fonction de l'albédo de l'objet cible, ledit au moins un paramètre d'évaluation étant pris en compte pour l'évaluation du signal de réception lors du traitement du signal de réception pour déterminer la distance par rapport à l'objet cible, en particulier une courbe à résolution temporelle dans la plage des picosecondes dudit au moins un paramètre d'évaluation étant générée.

9. Module de mesure de distance, configuré pour être utilisé dans un appareil de mesure de distance à laser, conçu comme un appareil de mesure de distance portable, un scanner laser, un profileur, un laser tracker ou un tachymètre, pour déterminer une distance par rapport à un objet cible, comprenant :

• une unité d'émission pour émettre un signal d'émission, en particulier une série de signaux pulsés,
• une unité de réception pour recevoir au moins des parties du signal d'émission réfléchi sur l'objet cible comme signal de réception,
• une unité de contrôle et de commande pour traiter le signal de réception afin d'en déduire la distance par rapport à l'objet cible, dans lequel l'unité de contrôle et de commande est conçue de telle sorte que le signal de réception est évalué au moyen d'une numérisation de forme d'onde (40), **caractérisé en ce que**
• l'unité d'émission et l'unité de réception (30, 100, 100') sont conçues de telle sorte que

o le signal d'émission est émis (20) dans un état de polarisation défini, et
o le signal d'émission (20) est émis et le signal de réception détecté de telle sorte qu'un identifiant de polarisation de l'état de polarisation du signal d'émission (20) soit attaché au signal de réception, l'identifiant de polarisation étant choisi de telle sorte qu'il indique si le signal de réception résulte d'une réflexion simple ou d'une réflexion multiple du signal d'émission (20), le signal d'émission (20) étant émis sous la forme d'un signal codé en polarisation présentant des signaux partiels ayant des états de polarisation différents les uns des autres et les signaux partiels étant émis séparément dans le temps ou au moyen de deux lasers qui présentent des longueurs d'onde différentes,

☐ un premier signal partiel étant émis dans un premier état de polarisation défini,
☐ un deuxième signal partiel étant émis dans un deuxième état de polarisation défini,
☐ au moins des parties du premier signal partiel réfléchi par l'objet cible étant détectées comme premier signal partiel de réception et au moins des parties du deuxième signal partiel réfléchi par l'objet cible étant détectées comme deuxième signal partiel de réception,
☐ une première intensité du premier signal partiel de réception étant mesurée, et
o une deuxième intensité du deuxième signal partiel de réception étant mesurée, et

• une première valeur de comparaison est déduite (50) par l'unité de contrôle et de commande sur la base de la première intensité et de la deuxième intensité en ce qui concerne le rapport d'intensité entre la première et la deuxième intensité, et une évaluation du signal de réception est déduite sur la base de la première valeur de comparaison,
l'évaluation du signal de réception étant prise en compte lors du traitement du signal de réception pour déterminer la distance par rapport à l'objet cible afin d'identifier ou de compenser des artefacts de mesure de distance générés par une réflexion multiple,
en particulier, l'unité d'émission étant conçue de telle sorte que le premier et le deuxième signal partiel sont émis sous la forme d'un rayonnement complètement polarisé linéairement ou circulairement.

**10.** Module de mesure de distance selon la revendication 9,
**caractérisé en ce que**

l'unité d'émission est conçue de telle sorte que le signal d'émission (20) est émis sous la forme d'une séquence de signaux d'émission de signaux partiels individuels, l'état de polarisation de signaux partiels individuels étant modifié dans le cadre de la détermination de la distance selon une succession temporelle définie,
en particulier, une séquence de polarisation temporelle de signaux partiels individuels complètement polarisés étant générée,
la séquence de polarisation comprenant en particulier :

• deux signaux partiels complètement polarisés linéairement orthogonaux entre eux ou
• deux signaux partiels complètement polarisés circulairement orthogonaux entre eux.

**11.** Module de mesure de distance selon l'une des revendications 9 à 10, **caractérisé en ce que**
le module de mesure de distance est configuré de telle sorte que le signal d'émission (20) est émis avec une divergence de faisceau définie et que le signal de réception est détecté avec l'unité de réception (30, 100, 100') de telle sorte que l'unité de réception (30, 100, 100') présente un angle de champ de vision qui est identique ou inférieur à la divergence de faisceau du signal d'émission (20).

**12.** Module de mesure de distance selon l'une des revendications 9 à 11, **caractérisé en ce que**
le module de mesure de distance est conçu de telle sorte que :

• le premier signal partiel du signal d'émission (20) est émis sous la forme d'un rayonnement complètement polarisé linéairement ou d'un rayonnement complètement polarisé circulairement,
• le deuxième signal partiel du signal d'émission (20) est émis sous la forme d'un rayonnement complètement polarisé avec un état de polarisation orthogonal au premier signal partiel, et
• la première valeur de comparaison est prise en compte pour une évaluation du premier et/ou du deuxième signal partiel de réception, en particulier pour une identification ou une résolution de signaux multiples dans le premier et/ou le deuxième signal partiel de réception par des réflexions multiples du premier et/ou du deuxième signal partiel sur des cibles multiples.

**13.** Module de mesure de distance selon l'une des revendications 9 à 12, **caractérisé en ce que**
le module de mesure de distance est conçu de telle sorte que :

• un troisième signal partiel du signal d'émission (20) est émis sous la forme d'un rayonnement complètement polarisé linéairement ou d'un rayonnement complètement polarisé circulairement,
• un quatrième signal partiel du signal d'émission (20) est émis sous la forme d'un rayonnement complètement polarisé avec un état de polarisation orthogonal au troisième signal partiel,

• au moins des parties du troisième signal partiel réfléchi sur l'objet cible sont détectées comme troisième signal partiel de réception et au moins des parties du quatrième signal partiel réfléchi sur l'objet cible sont détectées comme quatrième signal partiel de réception,

• une troisième intensité du troisième signal partiel de réception est mesurée avec un premier analyseur de polarisation,

• une quatrième intensité du quatrième signal partiel de réception est mesurée avec un deuxième analyseur de polarisation,

• sur la base de la troisième intensité et de la quatrième intensité, une deuxième valeur de comparaison est déduite (50), en particulier un rapport d'intensité, un degré de polarisation (DOP), un degré de polarisation linéaire (DOLP) ou un degré de polarisation circulaire (DOCP), et

• la deuxième valeur de comparaison est prise en compte pour une évaluation du troisième et/ou du quatrième signal partiel de réception, en particulier pour une identification ou une résolution de signaux multiples dans le troisième et/ou le quatrième signal partiel de réception par des réflexions multiples du troisième et/ou du quatrième signal partiel sur des cibles multiples.

**14.** Module de mesure de distance selon la revendication 12 ou 13, **caractérisé en ce que**
la première, respectivement deuxième valeur de comparaison est comparée à une première, respectivement deuxième valeur seuil sur la base d'un ensemble de propriétés de diffusion définies représentatives d'au moins un objet cible, sur la base d'au moins un élément du groupe suivant :

• une structure de surface géométrique,
• une porosité de surface,
• des propriétés d'albédo,
• des propriétés de réflexion,
• des propriétés d'absorption, et
• des propriétés de phase.

**15.** Module de mesure de distance selon l'une des revendications 9 à 14, **caractérisé en ce que**
le module de mesure de distance est configuré de telle sorte que :

• au moins un identifiant de polarisation du signal d'émission (20) est connu, en particulier la valeur d'au moins un paramètre de Stokes,
• au moins un identifiant de polarisation du signal de réception est déduit, en particulier la valeur dudit au moins un paramètre de Stokes, et
• sur la base dudit au moins un identifiant de polarisation du signal d'émission (20) et/ou dudit au moins un identifiant de polarisation du signal de réception, au moins un paramètre d'évaluation du groupe suivant est déduit (60) :

o un degré de polarisation (DOP) du signal de réception, en particulier le degré de polarisation linéaire (DOLP) et/ou circulaire (DOCP),
o un angle de polarisation du signal de réception,
o un facteur de dépolarisation entre le signal d'émission (20) et le signal

de réception, en particulier en fonction de l'albédo de l'objet cible, ledit au moins un paramètre d'évaluation étant pris en compte pour l'évaluation du signal de réception lors du traitement du signal de réception pour déterminer la distance par rapport à l'objet cible, en particulier une courbe à résolution temporelle dans la plage des picosecondes dudit au moins un paramètre d'évaluation étant générée.

**Fig.1a**

**Fig. 1b**

**Fig.2a**

**Fig.2b**

**Fig.2c**

**Fig.3**

**100** →

**103**

**101**

**102**

**104**

**Fig.4a**

**100'** →

**103'**

**106**

**104'**

**105**

**107**

**102'**

**104''**

**Fig.4b**

**Fig.5a**

**Fig.5b**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1832897 B1

- DE 102015200027 A1